(19) Europäisches Patentamt
European Patent Office
Office européen des brevets

(11) **EP 3 959 034 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **20723040.0**

(22) Anmeldetag: **23.04.2020**

(51) Internationale Patentklassifikation (IPC):
**B24B 9/10** $^{(2006.01)}$    **B24B 1/00** $^{(2006.01)}$
**B24B 7/24** $^{(2006.01)}$    **C03C 19/00** $^{(2006.01)}$
**B32B 17/06** $^{(2006.01)}$    **H05B 3/74** $^{(2006.01)}$
**H05B 6/12** $^{(2006.01)}$

(52) Gemeinsame Patentklassifikation (CPC):
**B24B 9/10; B24B 1/00; B24B 7/241; B24B 7/242; C03C 19/00**

(86) Internationale Anmeldenummer:
**PCT/EP2020/061311**

(87) Internationale Veröffentlichungsnummer:
**WO 2020/216829 (29.10.2020 Gazette 2020/44)**

(54) **GLAS- ODER GLASKERAMIKPLATTE UND VERFAHREN ZUR HERSTELLUNG DERARTIGER PLATTEN**

GLASS OR GLASS CERAMIC PANEL AND METHOD FOR PRODUCING SUCH PANELS

PLAQUE EN VERRE OU VITROCÉRAMIQUE ET PROCÉDÉ POUR LA FABRICATION DE TELLES PLAQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2019 DE 102019110489**

(43) Veröffentlichungstag der Anmeldung:
**02.03.2022 Patentblatt 2022/09**

(73) Patentinhaber: **SCHOTT AG**
**55122 Mainz (DE)**

(72) Erfinder: **FRANK, Klaus**
**55128 Mainz (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
**WO-A1-02/45909**     **WO-A1-2014/035946**
**JP-A- 2002 160 147**

## Beschreibung

Die Erfindung betrifft eine Glas- oder Glaskeramikplatte gemäß dem Oberbegriff des Anspruchs 1. Die Erfindung bezieht sich auch auf ein Verfahren zur Herstellung derartiger Glas- oder Glaskeramikplatten gemäß dem Anspruch 4 und dem Anspruch 8.

Glas- oder Glaskeramikplatten werden je nach Einsatzzweck mit oder ohne Facetten gefertigt. Derartige Glas- oder Glaskeramikplatten besitzen in der Regel eine rechteckige Form und werden zur Herstellung der Maßhaltigkeit und zum sicheren Handling in einem ersten Prozessschritt umlaufend mit einem Schliff versehen, der als Vorschleifen bezeichnet wird. Dieser Schliff erzeugt ein Profil mit einer definierten Kantengeometrie und beseitigt scharfkantige Übergänge und Defekte, die z. B. durch den vorgelagerten Prozess "Glasbrechen" an der Kante entstehen. Bei diesem Vorschleifen werden die Ecken der Platte in der Regel mit einer Rundung versehen. Die Eckradien der Rundungen laufen in die geraden Seiten der Platte aus, so dass in Draufsicht eine stetig verlaufende Konturlinie zu sehen ist.

Häufig werden die Platten an einer oder an mehreren Seiten mit einer Facette versehen. Das Facettieren oder Verrunden von Glaskanten ganz allgemein ist beispielsweise in den Schriften JP 2002 160147 A, WO 02/45909 A1 oder WO 2014/035946 A1 beschrieben.

Beim Facettieren einer Kante wird meist an der Oberfläche eine Abschrägung durch Schleifen und Polieren angebracht. Die Facette verläuft parallel zur Außenkante. Die ursprüngliche Plattendicke wird dadurch auf einen Wert von üblicherweise 20 % bis 80 % reduziert. Die verbleibende Kante wird als Restkante bezeichnet. Durch den Facettenschliff entsteht eine exponierte Kante, die selbst nach dem Anbringen einer Fase noch empfindlich für Stoßanschläge ist. Die mechanische Festigkeit des Werkstückes wird dadurch verringert.

Durch den Materialabtrag bei der Herstellung der Facette wird auch das Profil der Restkante verändert. Die Restkante muss daher überschliffen werden und mit einem neuen Profil versehen werden. Von diesem weiteren Materialabtrag ist auch die Rundung betroffen. Der Materialabtrag führt zu einer Verkürzung der Eckfläche und zu einer Verkleinerung des Eckwinkels, so dass der Radius der Rundung nicht mehr vollständig in die Restkante ausläuft. Die Kantenlinie weist am Übergang von Eckfläche zur Restkantenfläche nicht nur in Draufsicht eine Unstetigkeit, sondern in Seitenansicht der Platte auch einen horizontalen und einen vertikalen Versatz auf. Der ästhetische Eindruck wird erheblich beeinträchtigt.

Für das Facettieren und das Überschleifen der Restkante stehen üblicherweise Automaten zur Verfügung, die beide Bearbeitungsvorgänge in direkter Abfolge durch lineare Anordnung der erforderlichen Schleif- und Polierwerkzeuge ausführen. Das Werkstück wird in solchen Automaten geradlinig an den Schleif- und Polierwerkzeugen vorbeigeführt. Das Überschleifen der Restkante kann dabei optional zu- bzw. abgewählt werden, indem die entsprechenden Werkzeugpositionen zur Werkstückkante zugestellt bzw. zurückgezogen werden.

Es ist daher Aufgabe der Erfindung, eine facettierte Glas- oder Glaskeramikplatte anzugeben, deren umlaufende Konturlinie insbesondere im Übergang von Eckfläche zur Restkantenfläche möglichst gleichmäßig verläuft. Es ist auch Aufgabe der Erfindung, ein entsprechendes Verfahren zur Herstellung einer solchen Glas-oder Glaskeramikplatte anzugeben.

Die JP 2002160147 A beschreibt ein Kantenschleifverfahren, bei dem eine Schleifscheibe zum Einsatz kommt, die einen konkaven Querschnitt aufweist und aus einem Kunststoffmaterial mit eingelagerten Fasern und Schleifkörnern besteht. Den Glaskanten wird ein rundes Profil verliehen.

In der WO 02/45909 A1 wird eine Facettenschleifscheibe mit einem topfförmigen, eine mittige Aufnahmebohrung aufweisenden Schleifscheibenkörper beschrieben, dessen Topfrand als Schleifring ausgebildet ist. Im Inneren des Topfraums ist ein zweiter Schleifring konzentrisch angeordnet, der beim Schleifen von Flachfacetten an Glasscheiben, insbesondere Glaskeramikscheiben, die sich ausbildende Facette abstützt. Dadurch werden runde Einlaufecken bzw. Auslaufecken am Ende der Bruchkante vermieden.

Die WO 2014/035946 A1 offenbart ein vierstufiges Verfahren zur Bearbeitung von Bruchkanten von Glasplatten. Mit rotierenden Schleifscheiben werden zunächst an den Kanten Fasen hergestellt, wobei auch Material von der Bruchkante abgetragen wird. In einem weiteren Verfahrensschritt wird die verbleibende Stirnkante bearbeitet. Zum Schluss erfolgt noch ein Poliervorgang mit einer Polierrolle, wobei auch scharfe Ecken und Kanten abgerundet werden können.

Diese Aufgabe wird mit einer Glas- oder Glaskeramikplatte mit den Merkmalen des Anspruchs 1 gelöst.

Die Glas- oder Glaskeramikplatte ist dadurch gekennzeichnet, dass die Platte an der Ecke E und der angrenzenden Restkantenfläche einen Kantenindex $I_N = \dfrac{W_N}{V_Y}$ aufweist mit $W_N = \dfrac{W}{Y}$ und $V_Y \neq 0$, wobei $V_Y$ in mm den Abstand der Kontur-linien $K_R$ und $K_E$ in y-Richtung bezeichnet und dass für $I_N$ in mm$^{-1}$ gilt:

$0{,}1 \leq I_N \leq 1{,}5$ (Bedingung 1).

Unter einem Profil wird eine Kontur einer Kantenfläche verstanden, die durch zwei Parameter VK und HK gekennzeichnet ist. Die vertikale Kontur VK ist eine in der yz-Ebene liegende Kontur und die horizontale Kontur HK ist eine in der xy-Ebene liegende Kontur, wobei die Konturen VK und HK Geraden und/oder Krümmungen mit dazugehörigen Radien aufweisen.

Das xyz-Koordinatensystem dient lediglich zur besseren Beschreibung der Erfindung und legt nicht die Ausrichtung der Glas- oder Glaskeramikplatte im Raum, z. B. in einer Einbausituation, fest. Dies gilt auch für die Begriffe "unten" und "oben".

Die Platte weist eine Konturlinie K auf, worunter die in Draufsicht äußere Umfangslinie der Platte verstanden wird. Die Konturlinien $K_R$ und $K_E$ sind Abschnitte dieser Konturlinie K.

Der Eckwinkel W wird durch die Konturlinie $K_E$ aufgespannt.

Die Bedingung 1 gilt für Platten mit einer Facette. In diesem Fall ist nur eine Restkantenfläche vorhanden, die an die Eckfläche angrenzt. Der Radius R der Ecke E läuft zur benachbarten unbearbeiteten Kantenfläche vollständig aus.

Die Bedingung 1 gilt auch für Platten mit zwei Facetten. In diesem Fall sind zwei Restkantenflächen vorhanden, die an die Eckfläche angrenzen. Da der Radius R der Ecke E an beiden Seiten der Eckfläche nicht vollständig auslaufen kann, ist der Eckwinkel W kleiner als der Eckwinkel W bei Platten mit einer Facette.

Dies hat einen Einfluss auf den Kantenindex, der kleiner ist als der Kantenindex für Platten mit einer Facette.

Es hat sich gezeigt, dass Platten mit den beanspruchten Kantenindizes $I_N$ einen größeren Eckwinkel W aufweisen als dies beim Stand der Technik der Fall ist. Die Konturlinie K wird dadurch am Übergang von Eckfläche zu Restkantenfläche vergleichmäßigt, wozu auch die geringen Werte des Versatzes $V_Y$ beitragen.

Ein weiterer Vorteil besteht darin, dass bei Einhaltung des Kantenindex die Konturlinie K bei Projektion in die xy-Ebene keine Unstetigkeiten im Übergangsbereich von der Konturlinie $K_R$ zur Konturlinien $K_E$ aufweist. Dadurch wird der optische Eindruck der Platte deutlich verbessert.

Vorzugsweise gilt für die Bedingung 1 $0,4 \leq I_N \leq 1,5$.

Vorzugsweise weist die Kantenlinie $K_E$ einen Abstand $Z_E$ von der Unterkante auf, wobei $Z_R < Z_E$ ist.

Vorzugsweise gilt für den Abstand $Z_R$ der Konturlinie $K_R$ gilt: $D_U \leq Z_R \leq D_O$ mit $D_U = D_R \cdot 0,45$ und $D_O = D_R \cdot 0,55$.

Versuche haben gezeigt, dass die Kantenfestigkeit der Restkantenfläche dann am größten ist, wenn die Konturlinie $K_R$ mittig angeordnet ist, d. h. $Z_R = \dfrac{D_R}{2}$. Bei Unterschreiten des Grenzwertes $D_U$ bzw. bei Überschreiten des Grenzwertes $D_O$ wird die Kantenfestigkeit deutlich geringer und ist nicht mehr tolerierbar.

Vorzugsweise beträgt $D_U = D_R \cdot 0,48$ und $D_O = D_R \cdot 0,52$.

Vorzugsweise weist die Ecke ein Profil $P_E$ und die Restkantenfläche ein Profil $P_R$ auf, wobei mindestens eines der Profile $P_E$ oder $P_R$ ein in z-Richtung rundes Profil mit mindestens einem Krümmungsradius aufweist.

Solche runden Profile werden als C-Profil bezeichnet. Die Konturlinie eines C-Profils ist die Scheitellinie.

C-Profile haben den Vorteil, dass der Übergang zu den beiden Oberseitenflächen nicht scharfkantig ist, so dass die Handhabung der Platten verbessert wird. Auch wird dadurch die Stoßempfindlichkeit der Platten in diesem Bereich verringert.

Vorzugsweise sind beide Profile $P_E$ und $P_R$ in z-Richtung runde Profile mit mindestens einem Krümmungsradius.

Vorzugsweise sind diese C-Profile symmetrisch zu der in der xy-Ebene liegenden Mittellinie der betreffenden Plattenabschnitte. Symmetrische C-Profile zeichnen sich durch eine gute Kantenfestigkeit aus.

Anstelle von sogenannten C-Profilen können auch andere Profile zum Einsatz kommen, wie z. B. Profile, die eine gerade Fläche mit benachbarten Fasen und/oder Rundungen aufweisen. Derartige Profile werden als V-Profile bezeichnet. Vorzugsweise sind die V-Profile symmetrisch zu der in der xy-Ebene liegende Mittellinie der betreffenden Plattenabschnitte. Die Mittellinie bildet die Konturlinie.

Folgende Plattenparameter sind bevorzugt:

| | |
|---|---|
| D | 2 mm bis 5 mm, insbesondere 4 mm |
| $D_R$ | 2,0 mm bis 3 mm, insbesondere 2,5 mm |
| R | 1,5 mm bis 30 mm, insbesondere 5 mm |
| $\gamma$ | 80° bis 100°, insbesondere 90° |

Schleifscheibenradius $R_S$ 10 mm bis 150 mm, insbesondere 130 mm

| | |
|---|---|
| $R_1$ | 1,75 mm bis 6 mm |
| $R_R$ | 1,75 mm bis 6 mm |

Vorzugsweise weist die Glaskeramikplatte mindestens an der Eckfläche eine glasige Oberflächenzone auf. Vorzugsweise erstreckt sich die glasige Oberflächenzone mindestens über die gesamte Eckfläche.

Unter amorpher (glasiger) Oberflächenzone einer LAS-Glaskeramik wird eine Zone oder Schicht direkt an der Glaskeramik-Oberfläche verstanden, die im Gegensatz zum Inneren, d. h. dem Gefüge unterhalb dieser Randschicht, nicht die typischerweise im Mittel 20 nm bis 100 nm großen HQMK (oder andere) Kristalle aufweist, sondern überwiegend amorph ist. Die im Wesentlichen amorphe Oberflächenzone umfasst dabei für HQMK oder KMK (Keatit-Mischkristalle) als Hauptkristallphase maximal 10 Vol.-% Kristalle, d.h. mindestens 90 Vol.-% der Oberflächenzone bestehen aus einer glasigen Matrix (nachweisbar über streifende Röntgenbeugung). Besonders bevorzugt umfasst der amorphe Oberflächenbereich weniger als 1 Vol.-% Kristalle. Im Gegensatz dazu haben Kristalle an dem im wesentlichen kristallinen Inneren des Glaskeramik-Artikels einen Anteil von mindestens 70 Vol.-%, bevorzugt von mindestens 80 Vol.-%, besonders bevorzugt mindestens 90 Vol.-%.

Nachweisbar ist diese Schicht entweder über "Streifende Röntgenbeugung" oder auch über eine Querschnitts-Präparation und Elektronenbeugung im Transmissions-Elektronen-Mikroskop (TEM) oder indirekt im Raster-Elektronen-Mikroskop (SEM). Für die SEM-Untersuchung wird der Querschnitt vorher mit verdünnter Flusssäure chemisch angeätzt. Die Flusssäure greift die Glasphase der LAS-Glaskeramik deutlich stärker an als die HQMK-/KMK-Kristalle. Auf diese Weise wird der Kontrast der Kristalle verstärkt und im SEM sind die Korngrenzen der Kristalle erkennbar, so dass der Fachmann aufgrund der mit Röntgenbeugung und SEM/TEM sichtbar gemachten Strukturunterschiede zwischen kristallinem Inneren und glasigem Oberflächenbereich unterscheiden kann.

Die Dicke der glasigen Oberflächenzone liegt dabei im Bereich von 50 bis 5000 nm, bevorzugt von 250 bis 3000 nm und besonders bevorzugt von 300 bis 1500 nm.

Ein Übergangsbereich vermittelt zwischen dem glasigen Randbereich und dem kristallinen Inneren des Glaskeramik-Artikels, wobei die Anzahl bzw. der Anteil der Kristalle gegenüber der glasigen Matrix in Richtung auf das kristalline Innere zunimmt. Der Übergangsbereich zwischen dem glasigen Randbereich und dem kristallinen Inneren des Artikels ist dabei vorteilhafter Weise möglichst klein. Vorzugsweise wird er aufgrund des erfindungsgemäßen Verfahrens kleiner 100 nm in der Dicke gehalten. Ein möglichst kleiner Übergangsbereich zwischen dem glasigem Randbereich und dem kristallinem Inneren erhöht die Transmission des fertigen Artikels. Dabei gilt, je schärfer der Übergang zwischen den beiden Schichten, desto höher die Transmission.

Die Glaskeramik weist in dieser glasigen Oberflächenzone nicht nur eine große Transparenz sondern auch eine hohe mechanische Festigkeit auf, was insbesondere bei der Verwendung als Kochfläche von Vorteil ist.

Solche hochfeste, hochtransparente Glaskeramik-Artikel können durch eine bestimmte Kombination von Keimbildungs- und Kristallisationstemperaturen mit bestimmten Verweilzeiten und einer schnellen Abkühlungsrate hergestellt werden. Eine Verbesserung der oben genannten Eigenschaften ist für Ausgangsgläser unterschiedlicher Zusammensetzung gegeben. Die Vorteile hinsichtlich der Transparenz und Festigkeit sind vorzugsweise bei Lithium-Aluminosilikat-Glaskeramiken (LAS-Glaskeramiken) ausgeprägt.

Eine Glas- oder Glaskeramikplatte mit einer in einem orthogonalen xyz-Koordinatensystem in der xy-Ebene liegenden Oberseitenfläche und einer Unterseitenfläche, mit einer umlaufenden Unterkante und einer umlaufenden Oberkante, mit mindestens einer ersten Kantenfläche und mindestens einer zweiten Kantenfläche, wobei die Kantenflächen miteinander einen Winkel $\gamma$ bilden, und mit einer beide Kantenflächen verbindenden gekrümmten Eckfläche einer Ecke E, die einen Krümmungsradius R mit einem Mittelpunkt M, eine Konturlinie $K_E$ und einen Eckwinkel W aufweist, wobei die Oberseitenfläche an mindestens einer der beiden Kantenflächen eine Facette mit einer Facettenfläche aufweist, wodurch an der Kantenfläche eine Restkantenfläche mit einer Dicke $D_R$ und einer Konturlinie $K_R$ ausgebildet wird, ist dadurch gekennzeichnet, dass für einen Abstand $A_R$ der Konturlinie $K_R$ vom Mittelpunkt M $0{,}9 \cdot R \leq A_R \leq 1{,}1 \cdot R$ gilt.

Vorzugsweise gilt $0{,}95 \cdot R \leq A_R \leq 1{,}05 \cdot R$.

Die Aufgabe wird gemäß einer ersten Ausführungsform auch mit einem Verfahren zur Herstellung einer Glas- oder Glaskeramikplatte mit folgenden Schritten in folgender Reihenfolge gelöst:

a) Bereitstellen eines Plattenrohlings

- mit einer in einem orthogonalen xyz-Koordinatensystem in einer xy-Ebene liegenden ersten Oberseitenfläche und einer, in einer parallelen xy-Ebene liegenden zweiten Oberseitenfläche, und

- mit mindestens einer ersten Kantenfläche und einer zweiten Kantenfläche, die miteinander einen Winkel $\gamma$ bilden

b) Vorschleifen mindestens der Kantenflächen,

- wobei mindestens zwischen den Kantenflächen eine Eckfläche mit einem Eckradius R und einer Eckwinkel $\beta$ der Schleifkontur hergestellt wird,

- wobei an mindestens einer Kantenfläche ein an die Eckfläche angrenzender, sich über die Kantenfläche in x- oder in y-Richtung erstreckender Randstreifen mit der Breite $B_{ZG}$ herausgearbeitet wird und

- wobei mindestens die Kantenflächen, die Eckfläche und der Randstreifen mit einem Profil $P_1$ versehen werden,

c) Facettieren einer Oberseitenfläche, wobei mindestens eine, zu der den Randstreifen aufweisenden Kantenfläche auslaufende Facette hergestellt und die Kantenfläche zu einer Restkantenfläche verringert wird,

d) Überschleifen der Restkantenfläche, wobei die Restkantenfläche mit einem Profil $P_R$ versehen wird.

Der Vorteil des Verfahrens besteht darin, dass ein sich über die Kantenfläche in y-Richtung erstreckender Randstreifen herausgearbeitet wird, so dass im Verfahrensschritt d) beim Überschleifen der Restkante die Eckflächen nicht in dem Maß verkürzt werden, wie dies bei den herkömmlichen Verfahren der Fall ist. Der Eckwinkel W kann länger auslaufen, was den ästhetischen Eindruck verbessert. Das gleiche gilt auch für sich in x-Richtung erstreckende Randstreifen.

Vorzugsweise werden beim Herausarbeiten des Randstreifens ein gerader Randstreifenabschnitt und ein Übergangsabschnitt mit einer Übergangsabschnittsfläche hergestellt, wobei die Übergangsabschnittsfläche zur Eckfläche ausläuft. Das Vorsehen eines Übergangsabschnitts an den beiden Enden des geraden Randstreifens erleichtert die Herstellung des Randstreifens. Durch den kontinuierlichen Verlauf des Übergangsabschnitts werden scharfe Kanten am Randstreifen vermieden.

Vorzugsweise wird die Übergangsabschnittsfläche mit einem Krümmungsradius $R_Ü$ hergestellt.

Vorzugsweise wird der Krümmungsradius $R_Ü$ derart gewählt, dass $R_Ü \geq R_S$ ist, wobei $R_S$ der Radius einer für das Vorschleifen vorgesehenen Schleifscheibe ist.

Vorzugsweise wird beim Herausarbeiten des Randstreifens der Eckwinkel $\beta$ der Schleifkontur auf $60° \leq \beta \leq 90°$ eingestellt.

Es hat sich gezeigt, dass der Eckwinkel $\beta$ der Schleifkontur einen Einfluss auf die Länge in y-Richtung der Übergangsfläche sowie auf die Gestalt der Übergangsfläche und auf den Versatz $V_Y$ der Konturlinien $K_R$ und $K_E$ in y-Richtung hat. Je kleiner $\beta$ gewählt wird, desto kleiner wird die Übergangsfläche und damit auch der Wert $V_Y$. Der Winkel $\beta$ darf allerdings nicht zu klein gewählt werden, weil dadurch der Winkel W zu stark verkleinert wird.

Vorzugsweise geht das Überschleifen im Verfahrensschritt d) im Bereich des geraden Randstreifenabschnitts des Randstreifens mit einem Materialabtrag $B_{AT}$ einher, wobei $0{,}1 \cdot B_{ZG} \leq B_{AT} \leq 2 \cdot B_{ZG}$ ist. Vorzugsweise gilt $0{,}5 \cdot B_{ZG} \leq B_{AT} \leq 1{,}5 \cdot BZG$.

Es hat sich gezeigt, dass die Größe des Materialabtrags $B_{AT}$ einen Einfluss auf Länge und Größe der Übergangsfläche hat. Es ist bevorzugt, den Materialabtrag $B_{AT}$ gleich der Materialzugabe $B_{ZG}$ zu wählen.

Die Breite $B_{ZG}$ beträgt vorzugsweise 0,2 mm bis 2 mm, insbesondere 0,5 mm bis 1 mm.

Die Aufgabe wird gemäß einer zweiten Ausführungsform mit einem Verfahren zur Herstellung einer Glas- oder Glaskeramikplatte mit folgenden Schritten in folgender Reihenfolge gelöst:

a) Bereitstellen eines Plattenrohlings

- mit einer in einem orthogonalen xyz-Koordinatensystem in einer xy-Ebene liegenden ersten Oberseitenfläche und einer, in einer parallelen xy-Ebene liegenden zweiten Oberseitenfläche,

- mit mindestens einer ersten Kantenfläche und einer zweiten Kantenfläche, die miteinander eine Ecke mit einem Winkel $\gamma$ bilden und

- mit einer Breite $B_1$ und einer Länge $L_1$, wobei an mindestens einer Kantenfläche eine Materialzugabe der Breite $B_{ZG}$ berücksichtigt ist,

b) Vorschleifen mindestens der Kantenflächen,

- wobei mindestens die Kantenflächen, mit einem Profil $P_1$ versehen werden,

c) Facettieren einer Oberseitenfläche,

- wobei mindestens eine, zu der die Materialzugabe $B_{ZG}$ aufweisenden Kantenfläche auslaufende Facette hergestellt und die Kantenfläche zu einer Restkantenfläche verringert wird,

d) Überschleifen der Restkantenfläche,

- wobei die Restkantenfläche mit einem Profil $P_R$ versehen wird,

e) Überschleifen der mindestens einen Ecke,

- wobei zwischen den Kantenflächen eine Eckfläche mit einem Eckradius R und einem Eckwinkel der Schleifkontur $\beta$ hergestellt wird.

Wie bei der ersten Ausführungsform des Verfahrens kann im Verfahrensschritt a) von einem Plattenrohling aus Glas oder Glaskeramik ausgegangen werden. Wenn zur Herstellung einer Glaskeramikplatte eine Glasplatte bereitgestellt wird, kann die Keramisierung wie in der ersten Ausführungsform des Verfahrens nach allen Verfahrensschritten a) bis e) durchgeführt werden.

Der wesentliche Unterschied des Herstellungsverfahrens gemäß der zweiten Ausführungsform besteht darin, dass die Herstellung der Eckfläche bzw. der Eckflächen erst am Ende des Verfahrens durchgeführt wird. Der Vorteil dieser Verfahrensführung besteht darin, dass im Verfahrensschritt b ein vereinfachtes Kantenschleifverfahren angewendet werden kann, bei dem je zwei gegenüberliegende Kanten gleichzeitig, geradlinig in einem Durchlaufprozess bearbeitet werden. Solche Bearbeitungsmaschinen sind in der Glasindustrie für die einfache Bearbeitung von rechteckigen, flachen Scheiben weit verbreitet. Ein definierter Eckradius wird hierbei nicht angefügt.

Auch bei dieser zweiten Ausführungsform wird wie bei der ersten Ausführungsform eine Übergangsfläche erzeugt, weil die Profile $P_E$ und $P_R$ in z-Richtung versetzte Konturlinien $K_E$ und $K_R$ aufweisen.

Durch die Berücksichtigung der Materialzugabe $B_{ZG}$ weist das Maß $B_1$ und/oder das Maß $L_1$ gegenüber den Endmaßen B und/oder L ein entsprechendes Übermaß auf, das während der nachfolgenden Verfahrensschritte durch die Kantenbearbeitung zumindest teilweise abgetragen wird, um schließlich die Endmaße zu erhalten.

Vorzugsweise wird die Materialzugabe $B_{ZG}$ derart berücksichtigt, dass mindestens $B_1 = B_2 + n \cdot B_{ZG}$ und/oder $L_1 = L_2 + n \cdot B_{ZG}$ mit n = 1 oder n = 2 gilt. Hierbei wird n = 1 dann gewählt, wenn nur an einer Kantenfläche eine Facette angebracht wird. Wenn an zwei gegenüberliegenden Kantenflächen Facetten vorgesehen werden, wird n = 2 gewählt.

Vorzugsweise erstreckt sich die Materialzugabe mit der Breite $B_{ZG}$ über die gesamte Breite $B_1$ und/oder über die gesamte Länge $L_1$.

Vorzugsweise geht das Überschleifen im Verfahrensschritt d) mit einem Materialabtrag $B_{AT}$ einher, wobei $0{,}1 \cdot B_{ZG} \leq B_{AT} \leq 2 \cdot B_{ZG}$ ist.

Insbesondere erfolgt das Überschleifen im Verfahrensschritt d) mit einem Materialabtrag $B_{AT}$, wobei $B_{ZG} = B_{AT}$ ist.

Vorzugsweise wird der Verfahrensschritt e) mittels eines Schleifwerkzeugs durchgeführt, wobei das Schleifwerkzeug ausgehend von einer Kantenfläche bis zum Erreichen des Eckwinkels $\beta$ um die Ecke herumgeführt und anschließend über die Restkantenfläche kontinuierlich entfernt wird.

Das Schleifwerkzeug durchläuft hierbei eine S-förmige Bahnkurve, wobei beim kontinuierlichen Auslaufen der Bahnkurve in der Restkantenfläche die Übergangsfläche herausgearbeitet wird.

Vorzugsweise wird die Materialzugabe der Breite $B_{ZG}$ so groß gewählt, dass das im Verfahrensschritt b) aufgebrachte Profil $P_1$ im Verfahrensschritt d) vollständig durch das Profil $P_R$ ersetzt wird.

Vorzugsweise wird das Profil $P_R$ als ein Profil mit einem Krümmungsradius $R_R$ hergestellt.

Vorzugsweise wird das Profil $P_R$ als symmetrisches Profil hergestellt.

Vorzugsweise wird das Profil des Eckradius $P_E$ entsprechend dem Profil $P_1$ der angrenzenden Kantenfläche hergestellt.

Nachfolgend werden beispielhafte Ausführungsformen der Erfindung anhand der Zeichnungen näher erläutert. Es zeigen:

Figur 1a      die Draufsicht auf einen Plattenrohling gemäß dem Verfahrensschritt a) gemäß der ersten und zweiten Ausführungsform des Verfahrens,

Figur 1b      einen Teilschnitt längs der Linie I-II in Figur 1a durch den Rohling gemäß Fig. 1a,

Figur 2a      die Draufsicht auf einen Plattenrohling nach Durchführung des Verfahrensschrittes b) gemäß der ersten Ausführungsform des Verfahrens,

Figur 2b      einen Schnitt durch den bearbeiteten Rohling längs der Linie I-II in Figur 2a,

Figur 2c      eine vergrößerte Darstellung des oberen Randbereichs des bearbeiteten Rohlings aus Figur 2a gemäß einer ersten Ausführungsform,

Figur 2d      eine vergrößerte Darstellung des linken oberen Eckenbereichs des bearbeiteten Rohlings aus Figur 2a gemäß einer weiteren Ausführungsform,

| | |
|---|---|
| Figur 2e | eine vergrößerte Darstellung des linken oberen Eckenbereichs des bearbeiteten Rohlings aus Figur 2a mit Schleifscheibe zur Durchführung des Verfahrensschrittes b), |
| Figur 2f | eine perspektivische Darstellung eines Eckenbereichs des in Figur 2a gezeigten Rohlings, |
| Figur 3a | die Draufsicht auf den bearbeiteten Rohling nach Durchführung des Facettierens gemäß Verfahrensschritt c) gemäß der ersten Ausführungsform des Verfahrens, |
| Figur 3b | einen Schnitt durch den bearbeiteten Rohling längs der Linie I-II in Figur 3a, |
| Figur 3c | eine perspektivische Darstellung eines Eckenbereichs des bearbeiteten Rohlings gemäß Figur 3a, |
| Figur 4a | eine Draufsicht auf die fertiggestellte Platte nach Überschleifen gemäß dem Verfahrensschritt d) gemäß der ersten Ausführungsform des Verfahrens, |
| Figur 4b | eine vergrößerte Darstellung des rechten oberen Eckenbereichs der Platte aus Figur 4a, |
| Figur 4c | einen Schnitt durch die Platte längs der Linie I-II in Figur 4b, |
| Figur 5 | einen Schnitt durch einen Rohling und durch eine fertiggestellte Platte zur Erläuterung der Breite $B_{ZG}$, |
| Figur 6 | eine perspektivische Darstellung einer Ecke einer Glas- oder Glaskeramikplatte gemäß Fig. 4a, |
| Figur 7 | eine perspektivische Darstellung einer Ecke einer Platte gemäß einer weiteren Ausführungsform, |
| Figur 8 | eine perspektivische Darstellung einer Ecke einer Platte gemäß einer weiteren Ausführungsform, |
| Figur 8a | eine vergrößerte Darstellung der Ecke aus Fig. 7, |
| Figur 9 | eine perspektivische Darstellung einer Ecke einer Platte gemäß einer weiteren Ausführungsform, |
| Figur 10 | eine perspektivische Darstellung einer Ecke gemäß einer weiteren Ausführungsform, |
| Figuren 11 bis 13 | Draufsichten auf einen Rohling und eine fertige Platte, die zwei Facetten aufweist, jeweils nach den Verfahrensschritten b), c) und d), entsprechend den Figuren 2a, 3a und 4a, |
| Figur 14 | eine perspektivische Draufsicht einer Ecke einer Platte mit zwei Facetten, |
| Figur 15 | eine perspektivische Darstellung einer Ecke einer Platte mit zwei Facetten gemäß einer weiteren Ausführungsform, |
| Figur 16 | eine perspektivische Darstellung einer Ecke einer Platte gemäß dem Stand der Technik, |
| Figur 17 | eine perspektivische Darstellung einer Ecke einer Platte gemäß der Figur 9, |
| Figur 18a | eine perspektivische Darstellung einer Ecke einer Platte mit Sicht auf die Unterseite gemäß dem Stand der Technik, |
| Figur 18b | eine Draufsicht auf die Unterseite der in Fig. 18a dargestellten Platte gemäß dem Stand der Technik, |
| Figur 19a | eine perspektivische Darstellung einer Ecke einer Platte mit Sicht auf die Unterseite, |
| Figur 19b | eine Draufsicht auf die Unterseite der in Fig. 19a dargestellten Platte, |
| Figur 20a | die Draufsicht auf einen Plattenrohling nach Durchführung des Verfahrensschrittes b) gemäß der |

zweiten Ausführungsform des Verfahrens,

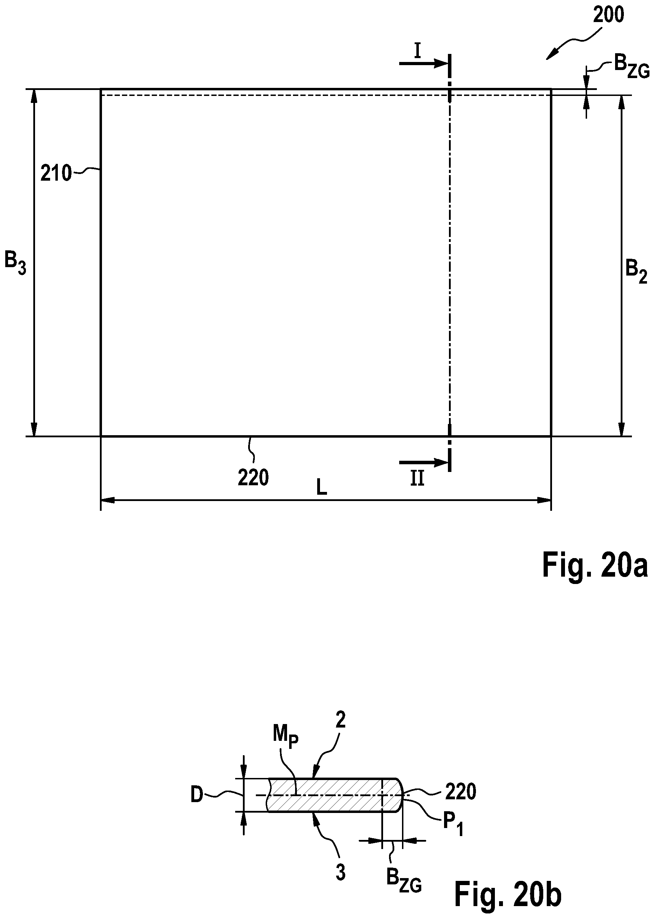

Figur 20b      einen Schnitt durch den bearbeiteten Rohling längs der Linie **I-II in** Figur 20a,

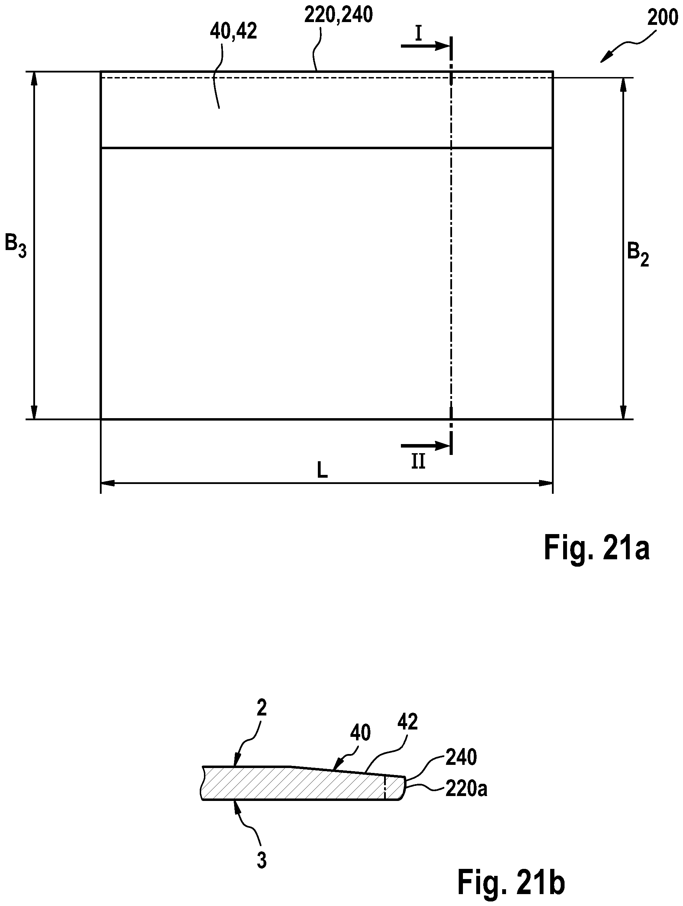

Figur 21a      die Draufsicht auf den bearbeiteten Rohling nach Durchführung des Facettierens gemäß Verfahrensschritt c) gemäß der zweiten Ausführungsform des Verfahrens,

Figur 21b      einen Schnitt durch die Platte längs der Linie I-II in Figur 21a,

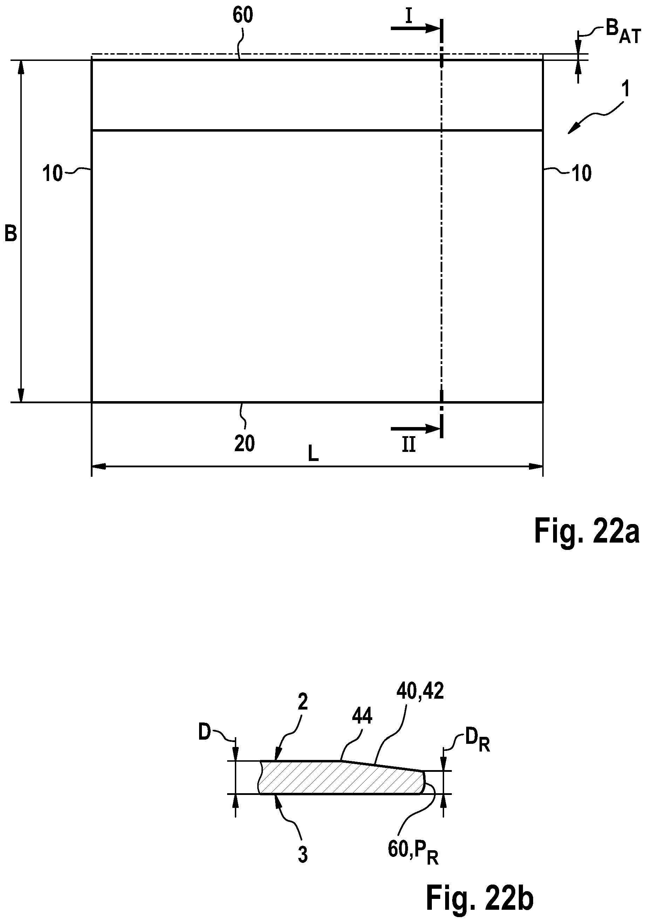

Figur 22a      eine Draufsicht auf die Platte nach Überschleifen gemäß dem Verfahrensschritt d) gemäß der zweiten Ausführungsform des Verfahrens,

Figur 22b      einen Schnitt durch die Platte längs der Linie I-II in Figur 22a,

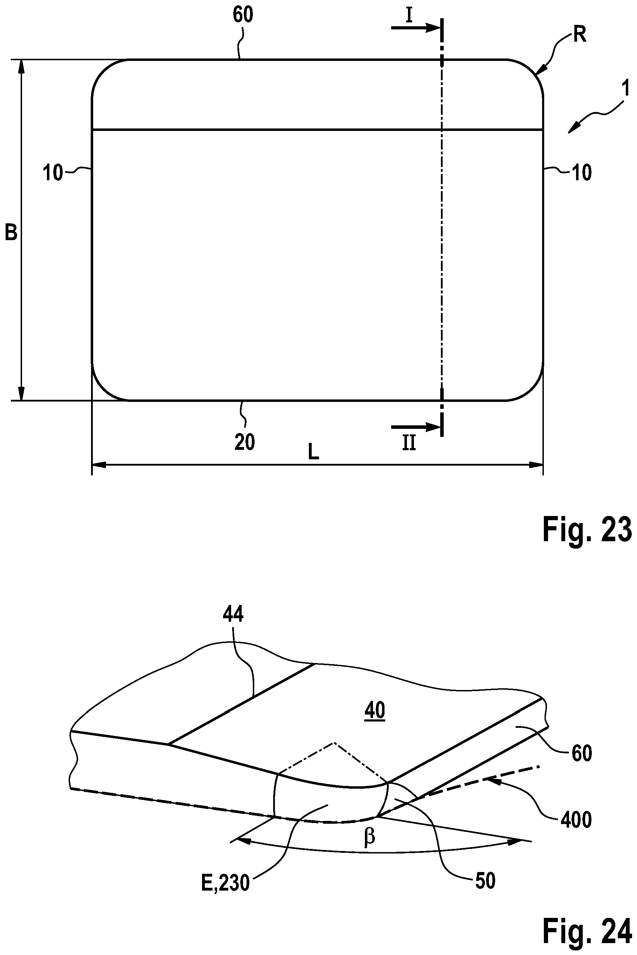

Figur 23      eine Draufsicht auf die fertiggestellte Platte nach Überschleifen gemäß dem Verfahrensschritt e) gemäß der zweiten Ausführungsform des Verfahrens, und

Figur 24      eine perspektivische Darstellung einer Ecke zur Erläuterung des Verfahrensschritts e) gemäß der zweiten Ausführungsform des Verfahrens.

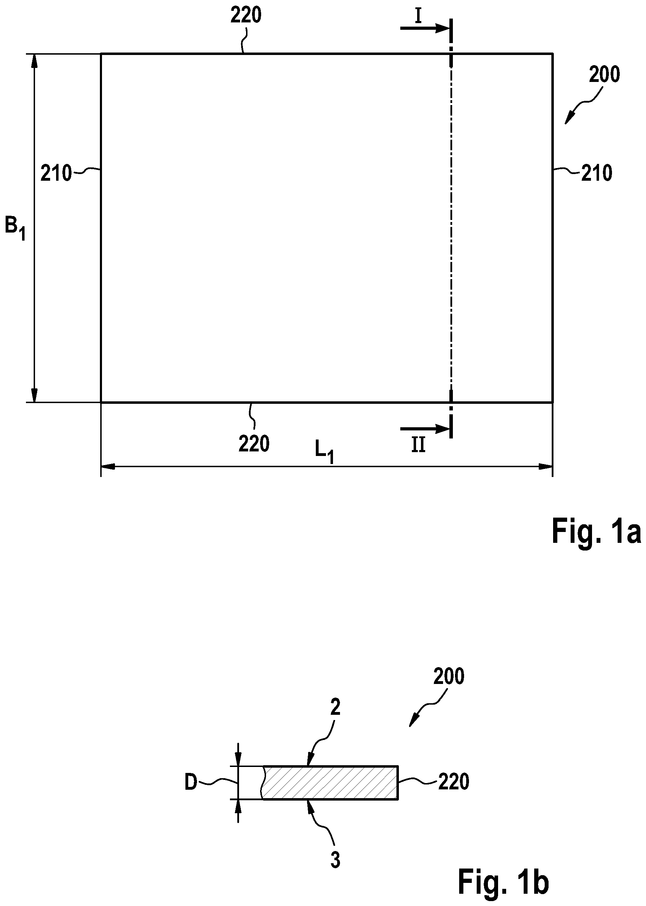

In der Figur 1a ist die Draufsicht auf einen Rohling 200 dargestellt, der aus Glas oder Glaskeramik bestehen kann. Der Rohling 200 besteht aus einer rechteckigen Platte mit einer Dicke D, einer Breite $B_1$ und einer Länge $L_1$ sowie gegenüberliegenden ersten Kantenflächen 210 und gegenüberliegenden zweiten Kantenflächen 220, die alle unbearbeitet sind. Der Rohling 200 besitzt eine erste Oberseitenfläche 2 und eine zweite Oberseitenfläche 3, die parallel zueinander angeordnet sind und in xy-Ebenen liegen (siehe Figur 1b). In einer Einbausituation, z. B. in einem Kochfeld, kann die erste Oberseitenfläche 2 die Oberseite und die zweite Oberseitenfläche 3 die Unterseite bilden.

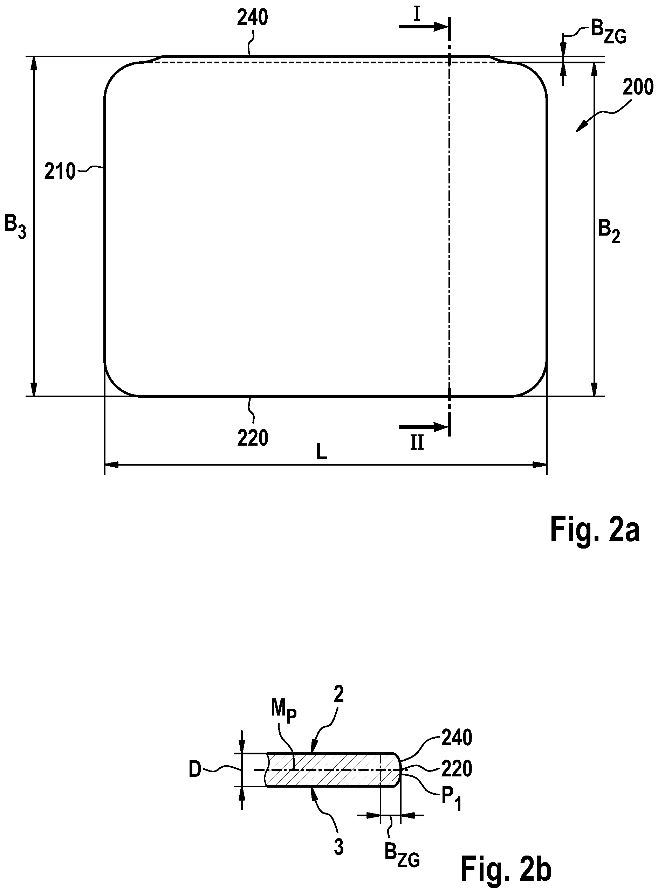

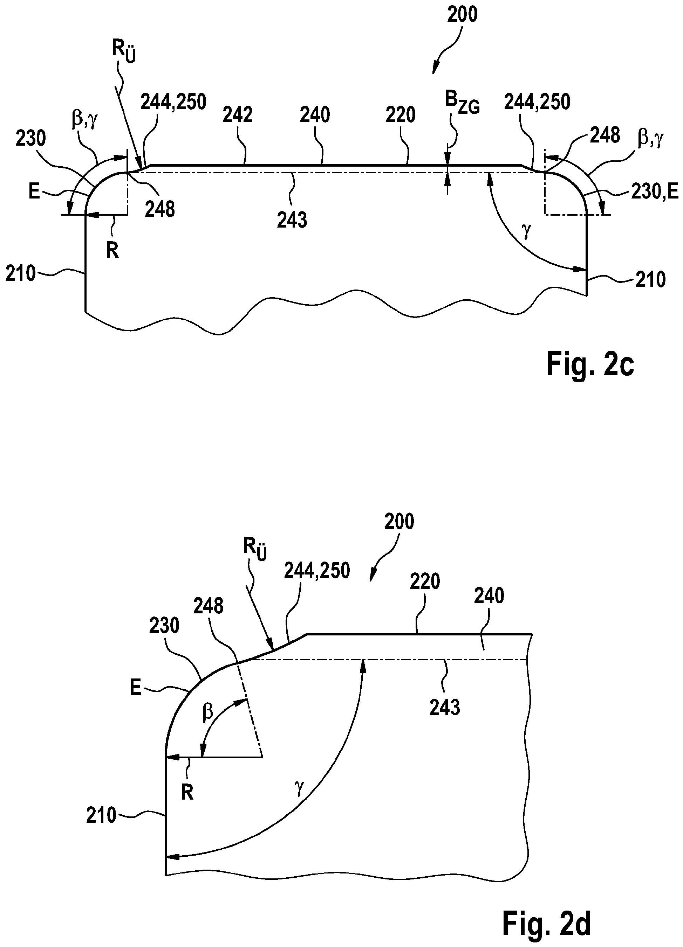

In Figur 2a ist die Draufsicht auf den Rohling 200 dargestellt, nachdem eine erste Kantenbearbeitung durchgeführt worden ist. Es handelt sich um das Vorschleifen gemäß Verfahrensmerkmal b), wobei zwischen den Kantenflächen 210 und 220 jeweils eine Eckfläche 230 mit einem Eckradius R und einem Eckwinkel der Schleifkontur $\beta$ hergestellt worden ist (siehe Figur 2c).

Da jede Kantenbearbeitung mit einem Materialabtrag verbunden ist, haben sich Breite und Länge des Rohlings 200 verringert. Die Länge $L_1$ des Rohlings 200 hat sich auf die Länge L verkürzt, die dem Endmaß der fertig bearbeiteten Platte 1 entspricht, weil durch die nachfolgenden Verfahrensschritte die Länge L nicht verändert wird.

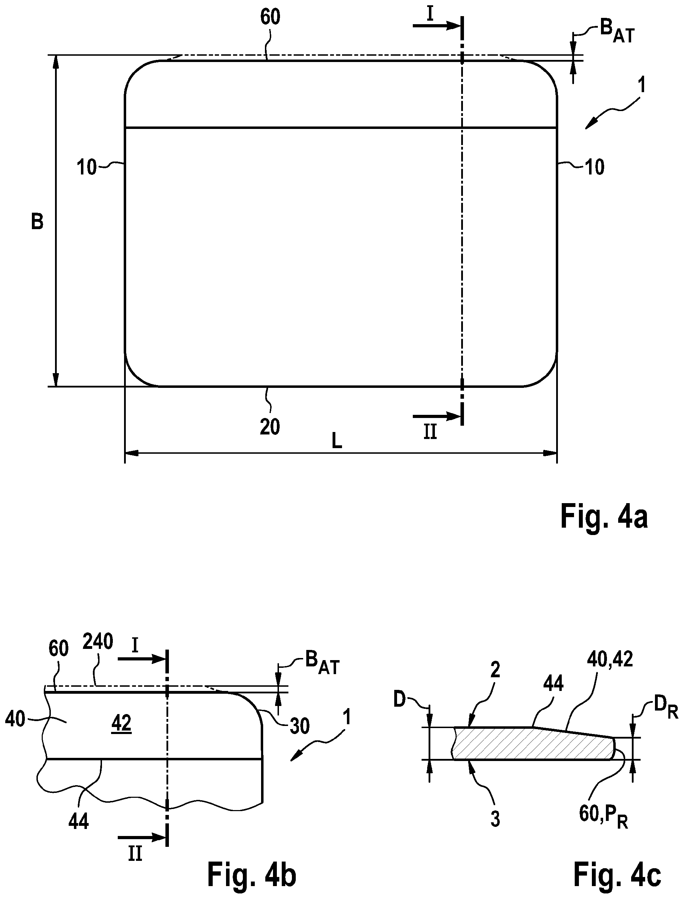

Die Breite $B_1$ hat sich auf die Breite $B_3$ verringert. Durch das Herausarbeiten eines Randstreifens 240 setzt sich die Breite $B_3$ aus einer Breite $B_2$ und einer Breite $B_{ZG}$ des Randstreifens 240 zusammen. Mit der Breite $B_{ZG}$ wird die Materialzugabe bezeichnet, die nach dem Verfahrensschritt c) in dem letzten Verfahrensschritt d) mindestens teilweise wieder abgetragen wird. Dieser Materialabtrag wird als $B_{AT}$ bezeichnet, was in den Figuren 4a und 4b dargestellt ist. Erst nach dem Verfahrensschritt d) wird das Endmaß B erreicht.

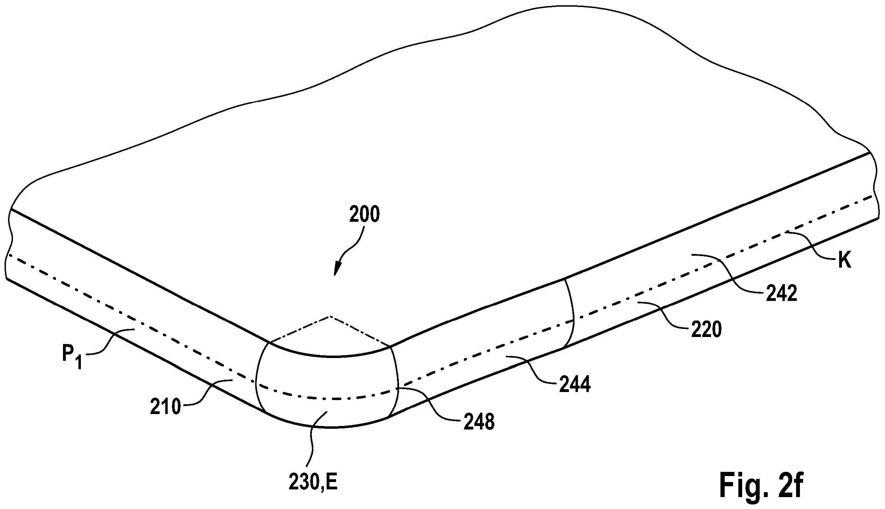

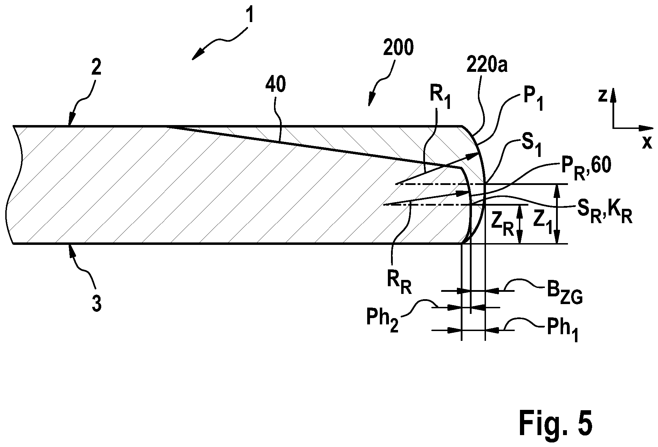

Bei der Kantenbearbeitung gemäß dem Verfahrensschritt b) werden alle Kantenflächen, das heißt die Kantenflächen 210 und 220 sowie die 4 Eckflächen 230 mit einem Profil $P_1$ versehen. Wie in der Schnittdarstellung der Figur 2b zu sehen ist, handelt es sich um ein rundes Profil mit einem Krümmungsradius $R_1$ (siehe auch Fig. 2f und Fig. 5), das als C-Profil bezeichnet wird. In der hier gezeigten Darstellung ist das C-Profil symmetrisch zur Mittellinie $M_P$ des Rohlings 200 ausgebildet.

In der Figur 2c ist der obere Randbereich des bearbeiteten Rohlings 200 aus Figur 2a vergrößert dargestellt. Die ersten Kantenflächen 210 gehen in jeweils eine Eckfläche 230 der Ecke E über, die sich über den Eckwinkel $\beta$ erstreckt. In der hier gezeigten Ausführungsform beträgt der Eckwinkel $\beta$ 90°, was dem Winkel $\gamma$ zwischen den ersten Kantenflächen 210 und den zweiten Kantenflächen 220 entspricht.

Die Eckflächen 230 der Ecken E gehen im Tangentpunkt 248 in den Randstreifen 240 über, der aus einem geraden Randstreifenabschnitt 242 und zwei an den geraden Randstreifenabschnitt 242 angrenzenden Übergangsabschnitten 244 mit Übergangsabschnittsflächen 250 besteht. Die Verbindungslinie 243 verbindet die beiden Tangentpunkte 248.

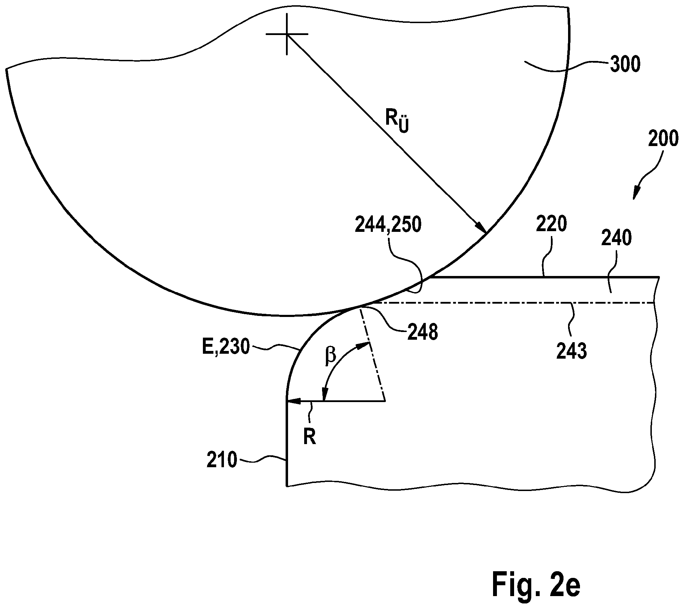

Die Übergangsabschnitte 244 besitzen einen Krümmungsradius $R_{\ddot{U}}$, der gleich dem Radius $R_S$ der für den Verfahrensschritt b) eingesetzten Schleifscheibe 300 sein kann, wie dies in der Figur 2e dargestellt ist.

In der Figur 2d ist eine weitere Ausführungsform dargestellt, in der der Eckwinkel $\beta$ ca. 70° beträgt. Der Randstreifen 240 erstreckt sich somit in den Eckenbereich und verkürzt die jeweils angrenzende Eckfläche 230.

Die perspektivische Darstellung in Figur 2f zeigt eine Ecke E des bearbeiteten Rohlings 200 gemäß der Figur 2c. Da der Rohling 200 mit einem umlaufenden C-Profil $P_1$ versehen wurde, bilden die Scheitellinien der Flächen 210, 220, 230 eine geschlossene Konturlinie K.

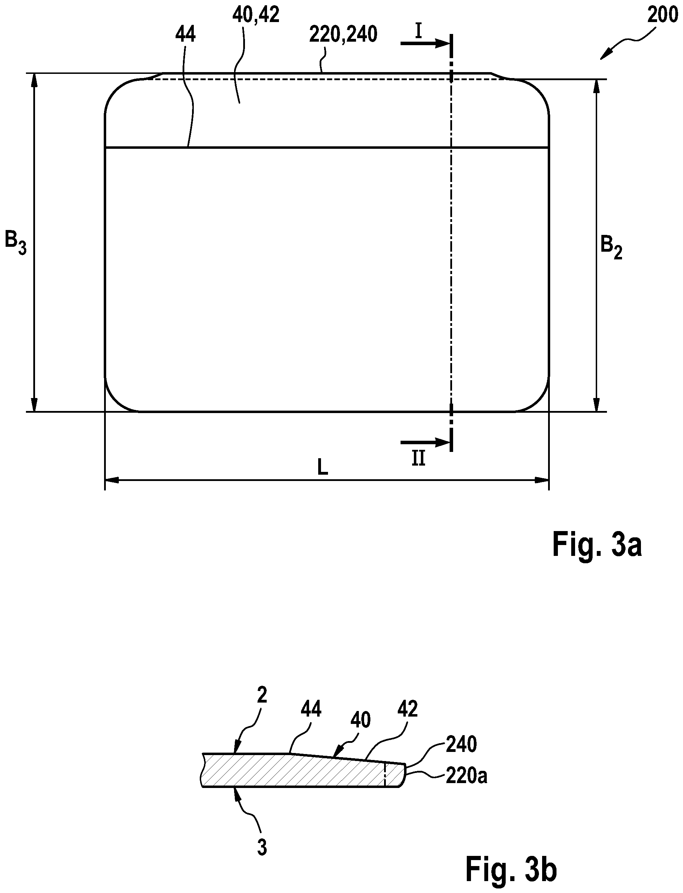

Die Figur 3a zeigt einen bearbeiteten Rohling 200 in Draufsicht nach dem Verfahrensschritt c), in dem eine Facette 40, die eine Facettenfläche 42 und eine Facettenkante 44 aufweist, an der zweiten Kantenfläche 220 hergestellt worden ist, an der sich der Randstreifen 240 befindet. Der entsprechende Querschnitt in dem Randbereich des Rohlings 200 ist in der Figur 3b dargestellt. Bei diesem Verfahrensschritt hat sich die Breite der zweiten Kantenfläche 220 zur Restkantenfläche 220a verkleinert.

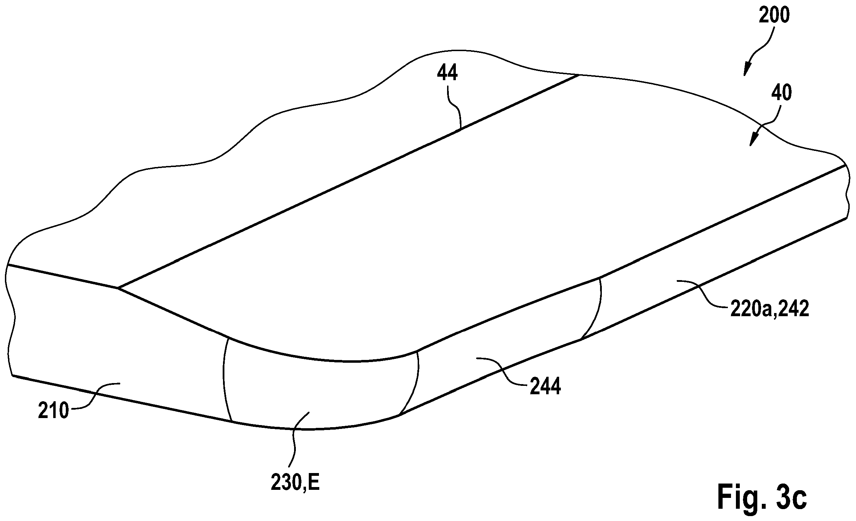

Die perspektivische Darstellung in der Figur 3c zeigt eine Ecke E des bearbeiteten Rohlings 200 gemäß der Figur 3a.

Die Figur 4a zeigt in Draufsicht die fertiggestellte Platte 1 mit den Kantenflächen 10, 20, 60 und den Endmaßen B und L nach dem Verfahrensschritt d), in dem die Restkantenfläche 220a überschliffen worden ist. In dem Verfahrensschritt d) wurde die Restkantenfläche 60 mit dem Profil $P_R$ versehen, das - wie die Figur 4c zeigt - ebenfalls ein C-Profil ist. Die überschliffene Restkantenfläche 60 weist eine Dicke $D_R$ auf.

Beim Überschleifen wurde ein Materialabtrag an dem Randstreifen 240 vorgenommen, der durch die Breite $B_{AT}$ gekennzeichnet ist (siehe auch Figur 4b).

Wie der Materialabtrag vorzugsweise zu bestimmen ist, wird in Figur 5 verdeutlicht, die einen Schnitt durch einen Rohling 200 in Kombination mit einem Schnitt durch eine fertig gestellte Platte 1 zeigt. Figur 5 zeigt den Rohling 200 mit der zweiten Kantenfläche 220 nach dem Verfahrensschritt b) und die fertige Platte mit der Restkantenfläche 60 nach dem Verfahrensschritt d), d. h. nach dem Überschleifen der Restkante.

Das Profil $P_1$ ist ein C-Profil ebenso wie das Profil $P_R$. Zu den Profilen $P_1$ und $P_R$ gehören die entsprechenden Radien $R_1$ und $R_R$. Die Konturlinien der Profile $P_1$ und $P_R$ sind Scheitellinien $S_1$ und $S_R$. $P_{h1}$ und $P_{h2}$ bezeichnen die Profilhöhen in x-Richtung.

$Z_R$ bezeichnet den Abstand der Konturlinie $K_R$, die der Scheitellinie $S_R$ der Restkantenfläche 60 entspricht, von der umlaufenden Unterkante 100 in der xy-Ebene der zweiten Oberseitenfläche 3. $Z_1$ bezeichnet den Abstand der Konturlinie $K_1$, die der Scheitellinie $S_1$ der Kantenfläche 10 entspricht, von der umlaufenden Unterkante 100. $Z_E$ bezeichnet den Abstand der Konturlinie $K_E$, die der Scheitellinie $S_E$ der Eckfläche 30 entspricht, von der umlaufenden Unterkante 100.

Die Materialzugabe der Breite $B_{ZG}$ errechnet sich wie folgt:

$$B_{ZG} \geq P_{h1} - P_{h2} \text{ wobei } P_{h1} = R_1 - \sqrt{R_1^2 - z_1} \text{ und } P_{h2} = R_R - \sqrt{R_R^2 - z_R} \text{ ist.}$$

$B_{ZG}$ ist vorzugsweise mindestens so breit, dass das Profil $P_R$ der Restkantenfläche 60 innerhalb des Profils $P_1$ des Vorschliffs liegt.

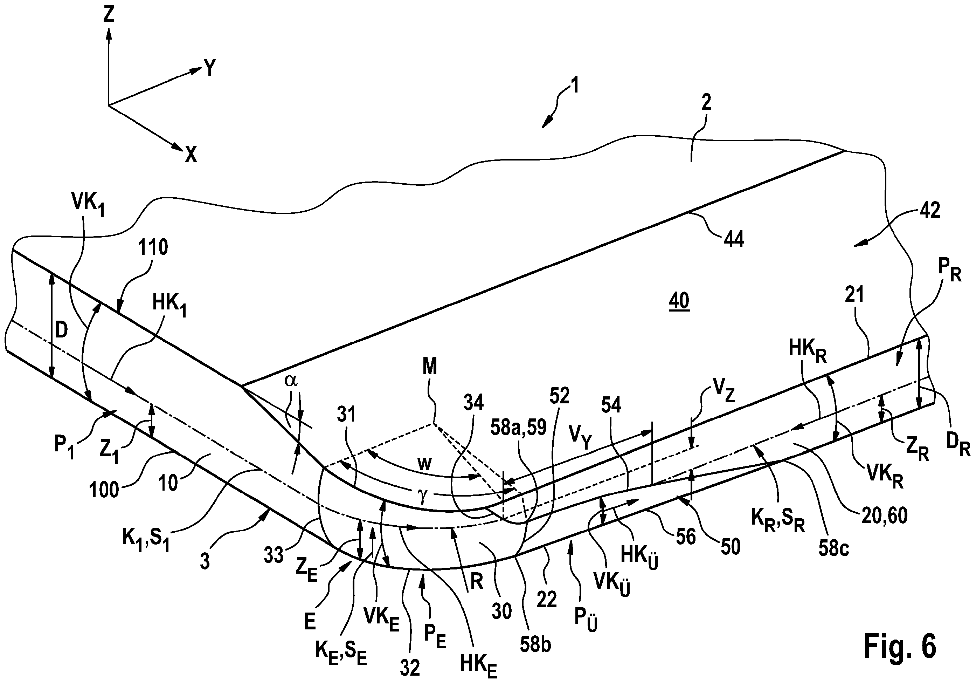

Der Materialabtrag der Breite $B_{AT}$ beträgt vorzugsweise $B_{ZG} \leq B_{AT}$, insbesondere $B_{AT} = B_{ZG}$ und beeinflusst die Größe $V_Y$, d. h. den Versatz der Konturlinie $K_R$ zur Konturlinie $K_E$, wie dies in der Figur 6 zu sehen ist.

Die Figur 6 zeigt eine perspektivische Darstellung einer Ecke E einer Glas- oder Glaskeramikplatte 1, nachdem sämtliche Verfahrensschritte a) bis d) durchgeführt worden sind.

Die Glaskeramikplatte 1 weist die umlaufende Unterkante 100 und die umlaufende Oberkante 110 auf. Die Facette 40 wird durch die obere Kante 21 und die Facettenkante 44 begrenzt. Die Eckfläche 30 der Ecke E wird durch die Grenzlinie 33, die obere Kante 31, die untere Kante 32 sowie die Begrenzungslinien 34 und 52 begrenzt.

Mindestens die Eckfläche 30 und die Übergangsfläche 50 weisen eine glasige Oberflächenzone auf.

Die Erläuterungen zu der in Figur 6 dargestellten linken Ecke E der Platte 1 gelten in entsprechender Weise auch für eine zweite, rechte Ecke der Platte 1 sowie für weitere Ecken einer Platte 1, wenn weitere Facettenflächen 40 vorgesehen sind.

Die Parameter wurden wie folgt gewählt:
D = 4 mm, $D_R$ = 2,5 mm, R = 5 mm, $\gamma$ =90°, $\beta$= 90°, $B_{ZG}$ = 0,5 mm, $B_{AT}$ = 0,5 mm, $P_1$ und $P_R$ sind jeweils ein C-Profil mit den Krümmungsradien $R_1$ = 3 mm und $R_R$ = 3 mm, Facette 40 weist einen Facettenwinkel $\alpha$ von 8,5° und eine Facettenbreite von 10 mm auf. Die Winkel $\gamma$ und $\beta$ beziehen sich auf den Mittelpunkt M.

Die Parameter des dazugehörigen Rohlings entsprechen der in Figur 2c gezeigten Draufsicht auf einen Rohling 200.

In der Figur 6 sind zum Profil $P_1$ die horizontale Kontur $HK_1$ und die vertikale Kontur $VK_1$ sowie vom Profil $P_E$ die vertikale Kontur $VK_E$ und die horizontale Kontur $HK_E$ eingezeichnet. Das Profil $P_R$ umfasst die horizontale Kontur $HK_R$ und die vertikale Kontur $VK_R$. Die Übergangsfläche 50 besitzt das Profil $P_Ü$ mit den Konturen $VK_Ü$ und $HK_Ü$. Die Profile $P_1$, $P_E$ und $P_R$ sind C-Profile mit den Konturlinien $K_1$, $K_E$ und $K_R$, die mit den Scheitellinien $S_1$, $S_E$ und $S_R$ identisch sind.

Es ist zu sehen, dass der Winkel $\gamma$ = 90° sich auf den Winkel W = 78,8° verkleinert hat, wobei der vertikale Versatz $V_Z$ = 0,75 mm und der horizontale Versatz $V_Y$ = 5,95 mm beträgt. Der Eckwinkel W wird durch die Konturlinie $K_E$ aufgespannt.

Die Restkantenfläche 60 weist eine Übergangsfläche 50 auf, die ein vom Profil $P_R$ abweichendes Profil $P_Ü$

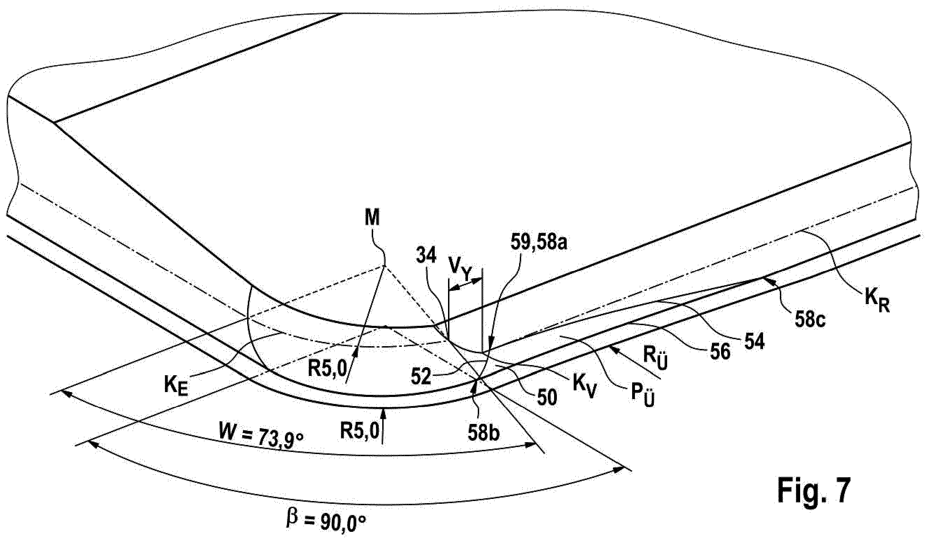

aufweist. Die Übergangsfläche 50 ist ein Überbleibsel des Übergangsabschnitts 244, der beim Überschleifen der Restkante nicht bearbeitet wurde. Wenn der Materialabtrag $B_{AT}$ vergrößert wird, nimmt auch die Größe der Übergangsfläche 50 ab. Mit zunehmendem Materialabtrag verändern sich sowohl der Eckwinkel W als auch $V_Y$, wie in der Figur 7 dargestellt ist. Der Materialabtrag beträgt 0,6 mm, so dass sich der Winkel W auf 73,9° reduziert. $V_Y$ beträgt 1,17 mm.

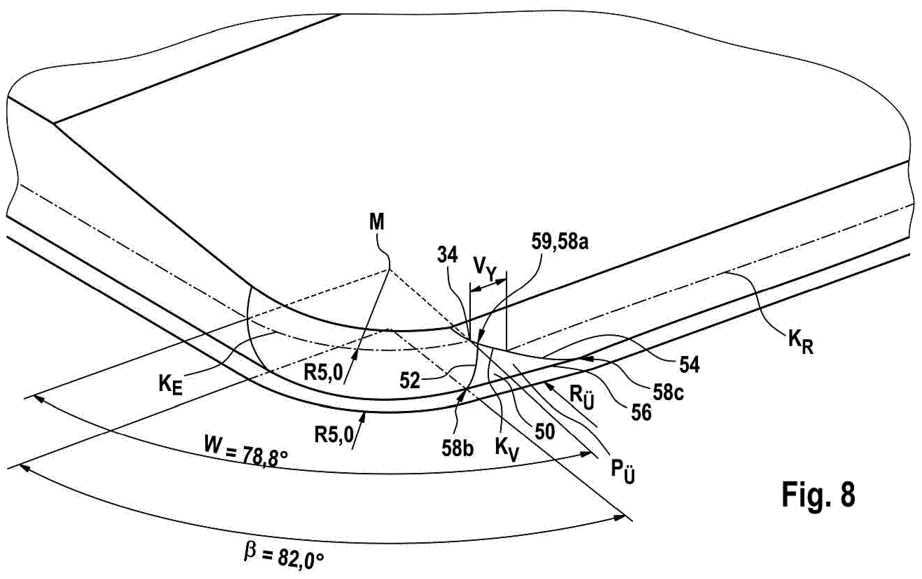

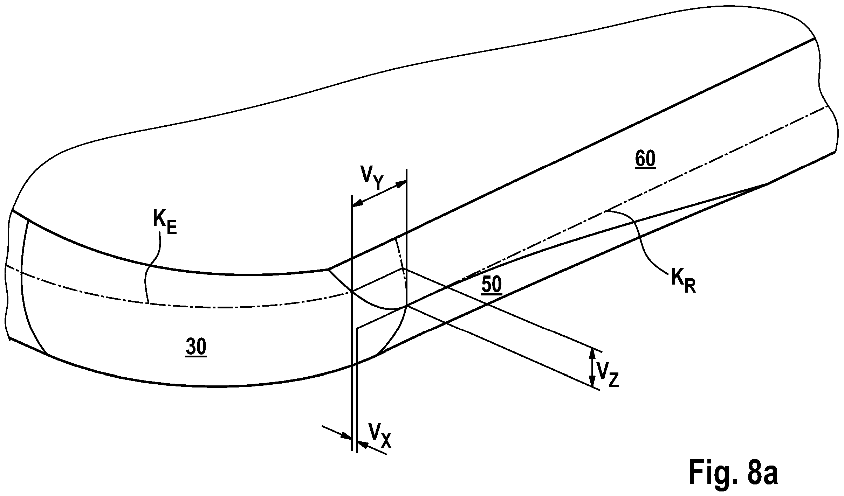

In der Figur 8 ist eine weitere Ausführungsform dargestellt, in der der Eckwinkel β der Schleifkontur mit β = 82° gewählt wurde (siehe auch Figur 2d). Die übrigen Parameter der Platte 1 entsprechen der Figur 6.

Die Übergangsfläche 50 in der Fig. 8 ist ebenso wie in der Figur 6 dreieckig und weist Ecken 58a, b, c auf. Die Übergangsfläche 50 wird durch die untere Kante 56 sowie die beiden Begrenzungslinien 52 und 54 begrenzt, was der Übergangsfläche 50 eine "segelförmige" Gestalt verleiht. Die beiden Konturlinien $K_E$ und $K_R$ sind durch die Verbindungskonturlinie $K_V$ miteinander verbunden, die aus einem Abschnitt der Begrenzungslinie 54 und einem Abschnitt der Begrenzungslinie 34 gebildet wird. Die Begrenzungslinien 34, 54 und 52 treffen sich in einem Schnittpunkt 59. Die Konturlinie $K_V$ wird somit maßgeblich durch die Gestalt der Übergangsfläche 50 bestimmt.

Der Schnittpunkt 59 liegt zwischen den Konturlinien $K_E$ und $K_R$. Die Länge der Konturlinie $K_V$ wird durch den horizontalen Versatz $V_Y$ charakterisiert, wie dies in Fig. 8a verdeutlicht wird, wo ebenfalls der Versatz $V_X$ und der Versatz $V_Z$ eingezeichnet sind.

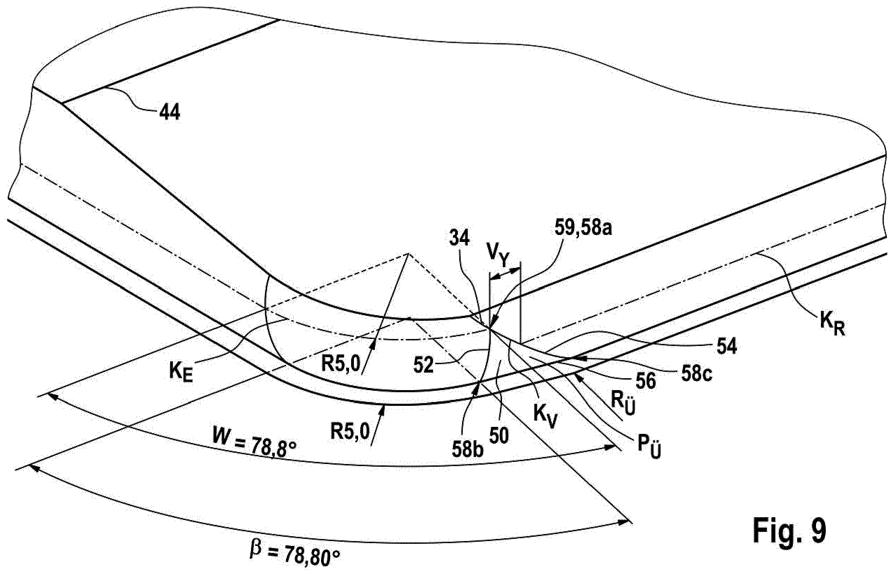

In der Figur 9 ist eine weitere Ausführungsform einer Platte 1 dargestellt, der Winkel β beträgt 78,8°. Die übrigen Parameter entsprechen der Platte aus der Figur 8. Durch die Verringerung des Eckwinkels β der Schleifkontur ist der Schnittpunkt 59 nach oben gewandert und liegt in dieser Ausführungsform auf der Konturlinie $K_E$.

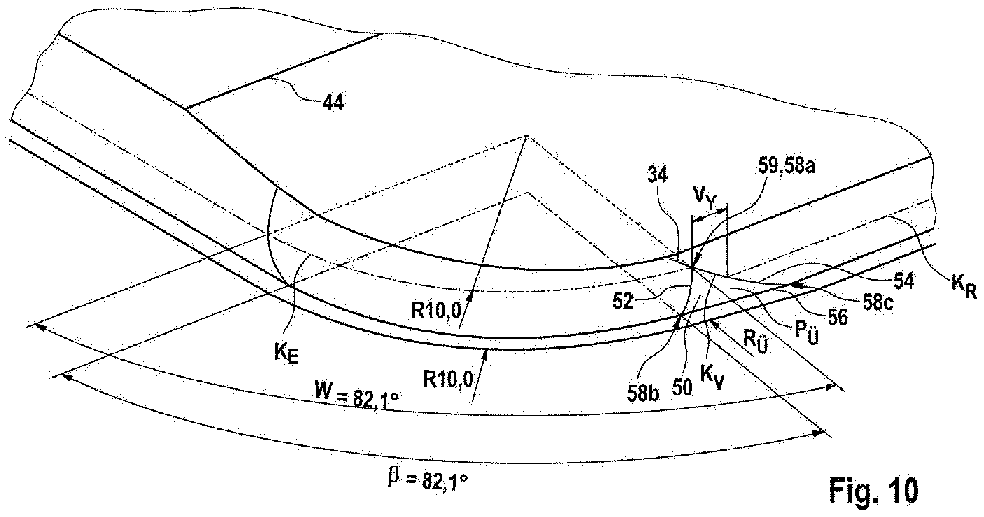

In der Figur 10 ist eine weitere Ausführungsform dargestellt, bei der der Radius R des Eckwinkels 10 mm beträgt. Der Winkel β der Schleifkontur beträgt 82,1°, ebenso wie der Winkel W. Es ist zu sehen, dass die Übergangsfläche 50 die gleiche Gestalt aufweist wie in Figur 9. In der Ausführungsform der Figur 10 beträgt der Versatz $V_Y$ 1,33 mm, während der Versatz Vy in der Figur 9 0,95 mm beträgt.

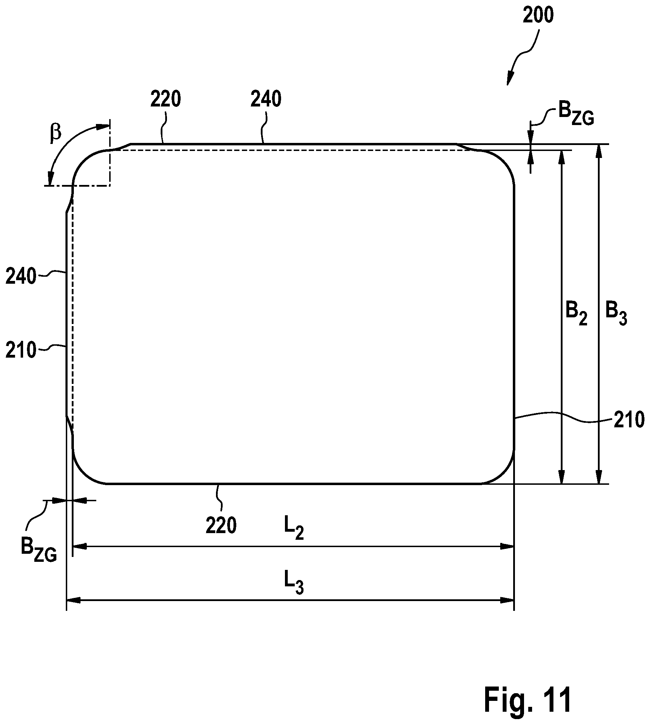

Die Figuren 11 bis 13 entsprechen den Figuren 2a, 3a und 4a und betreffen eine Platte mit zwei Facetten 40.

In der Figur 11 ist der Rohling 200 dargestellt, der an einer Kantenfläche 220 und an einer Kantenfläche 210 jeweils einen Randstreifen 240 aufweist. Der Winkel β der Schleifkontur beträgt 90°. Die Draufsicht auf die Platte in Figur 11 zeigt den Rohling nach dem Verfahrensschritt b). Die Materialzugaben $B_{ZG}$ sind bei beiden Randstreifen 240 gleich groß. Die Länge $L_2$ bezeichnet die Länge ohne die Materialzugabe und die Länge $L_3$ die Länge des Rohlings nach dem Vorschliff.

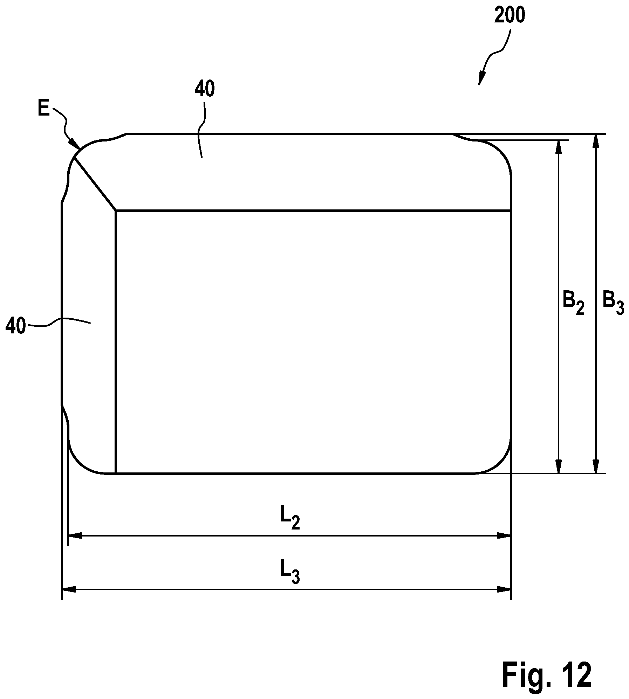

In der Figur 12 ist der Rohling nach Durchführung der Facettierung gemäß dem Verfahrensschritt c) dargestellt. Die beiden Facetten 40 grenzen an der Ecke E aneinander.

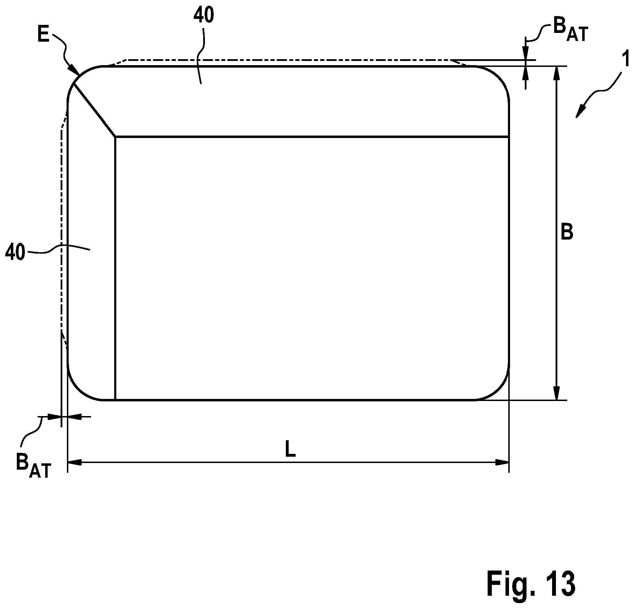

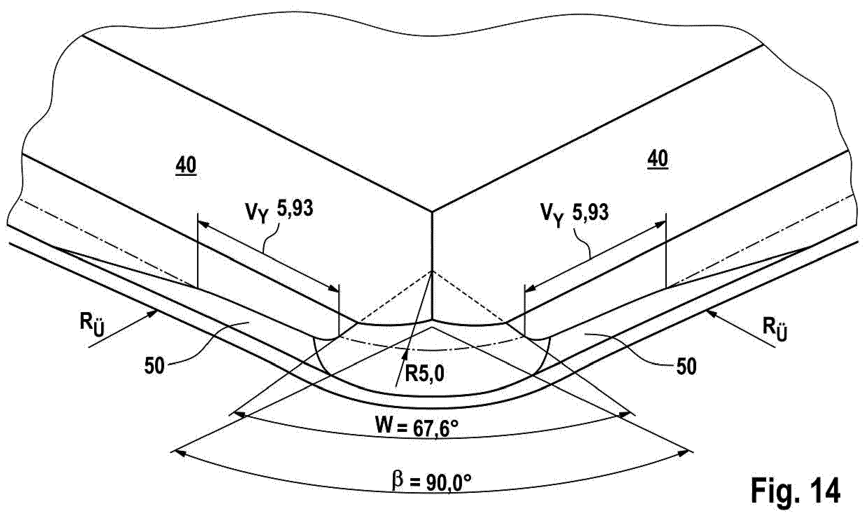

In der Figur 13 ist die fertige Platte 1 nach Durchführung des Verfahrensschritts d) dargestellt. Eine perspektivische Darstellung auf die Ecke E der Figur 13 ist in der Figur 14 zu sehen. Durch die zweifache Facettierung ist der Eckwinkel W auf 67,6° verkleinert worden. Die Materialzugabe beträgt 0,5 mm, der Materialabtrag 0,5 mm und der Schleifscheibenradius $R_Ü$ 130 mm. Der horizontale Versatz $V_Y$ ist an beiden Facetten mit 5,93 mm gleich groß.

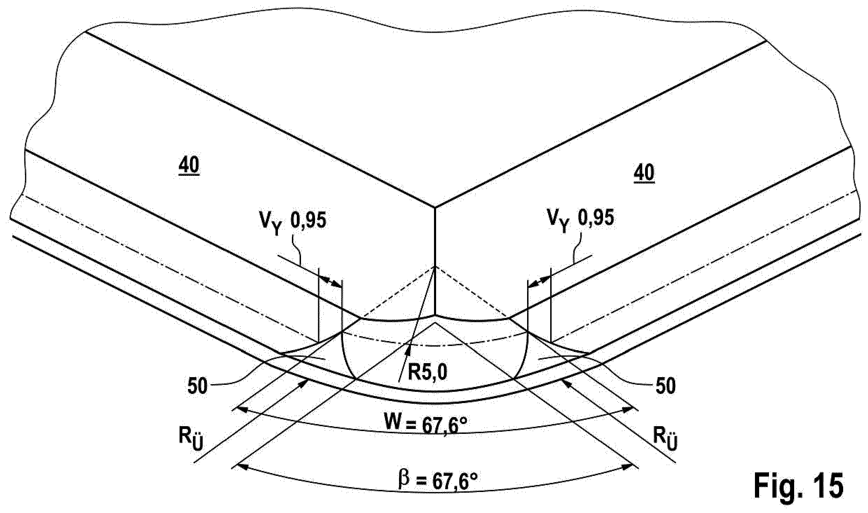

In der Figur 15 ist eine weitere Ausführungsform einer Platte 1 mit zwei Facetten 40 dargestellt. Während in der Figur 14 der Winkel β der Schleifkontur 90° beträgt, liegt der Winkel β in der Ausführungsform gemäß der Figur 15 bei 67,6°. Der Eckwinkel W beträgt ebenfalls 67,6°.

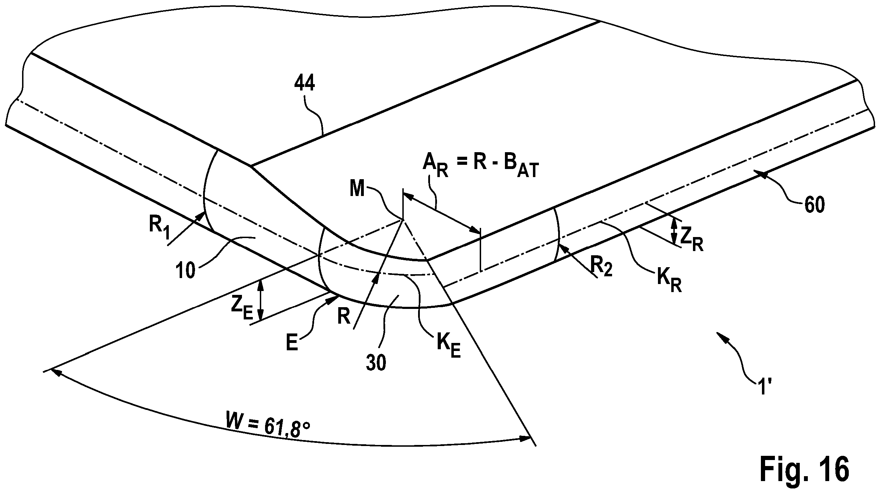

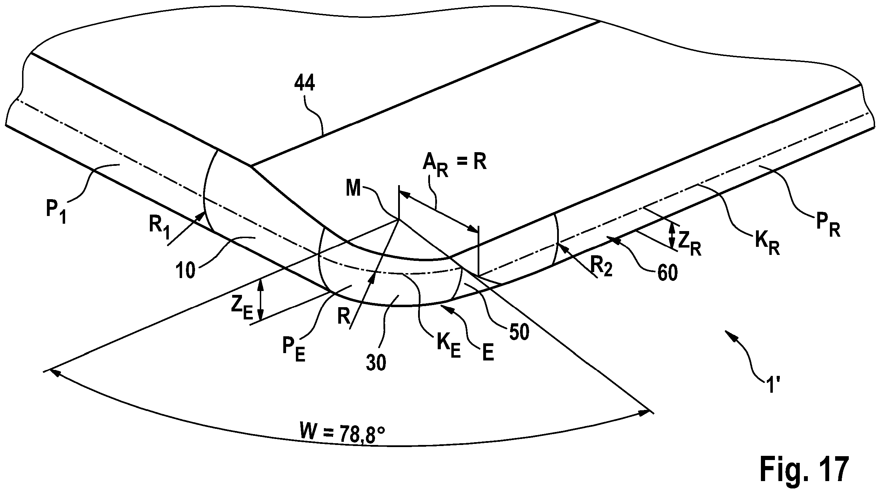

Die Figur 16 zeigt eine Platte 1' nach dem Stand der Technik und die Figur 17 eine Platte 1, wie sie in Figur 9 dargestellt ist. In beiden Figuren 16 und 17 wurde der Abstand $A_R$ eingezeichnet, der den Abstand der Konturlinie $K_R$ vom Mittelpunkt M der Ecke E bezeichnet. Beide Platten 1 und 1' weisen dieselben Abmessungen D, $D_R$, R, $Z_E$, $Z_R$, $P_1$, $P_E$, $P_R$ auf. Es ist zu sehen, dass der Winkel W der Platte 1 mit 78,8° deutlich größer als der Winkel W der Platte 1' mit W = 61,8° nach dem Stand der Technik ist.

Ein weiterer wesentlicher Unterschied besteht im Abstand $A_R$ der Kantenlinie $K_R$ der Restkantenfläche 60 vom Mittelpunkt M der Ecke E, der dem Eckradius R der Ecke E entspricht. Durch das Überschleifen der Restkantenfläche 60 nach den Verfahren im Stand der Technik wird durch den damit verbundenen Materialabtrag $B_{AT}$ der Abstand $A_R$ deutlich verringert, da die Materialzugabe $B_{ZG}$ nicht als Randstreifen gesondert angebracht wird, was einen entsprechenden Einfluss auf den Winkel W hat. Beim erfindungsgemäßen Verfahren wird durch die gezielte Materialzugabe in Form des Randstreifens 240 und dem danach stattfindenden Materialabtrag $B_{AT}$ mit bevorzugt $B_{AT} = B_{ZG}$ erreicht, dass der Abstand $A_R = R$ ist.

In der nachfolgenden Tabelle sind die Daten der Platten aus den Figuren 6, 7, 8, 9, 10 und 14 bis 16 zusammengefasst:

| | D [mm] | $D_R$ [mm] | R [mm] | γ [°] | β [°] | $B_{ZG}$ [mm] | $B_{AT}$ [mm] | $V_Z$ [mm] | $V_Y$ [mm] | W [°] | Anzahl Facetten | $W_N$ | $I_N$ [mm$^{-1}$] |
|---|---|---|---|---|---|---|---|---|---|---|---|---|---|
| Fig. 6 | 4 | 2,5 | 5 | 90 | 90 | 0,5 | 0,5 | 0,75 | 5,95 | 78,8 | 1 | 0,87 | 0,15 |
| Fig. 7 | 4 | 2,5 | 5 | 90 | 90 | 0,5 | 0,6 | 0,75 | 1,17 | 73,9 | 1 | 0,82 | 0,70 |

(fortgesetzt)

| | D [mm] | $D_R$ [mm] | R [mm] | $\gamma$ [°] | $\beta$ [°] | $B_{ZG}$ [mm] | $B_{AT}$ [mm] | $V_Z$ [mm] | $V_Y$ [mm] | W [°] | Anzahl Facetten | $W_N$ | $I_N$ [mm$^{-1}$] |
|---|---|---|---|---|---|---|---|---|---|---|---|---|---|
| Fig. 8 | 4 | 2,5 | 5 | 90 | 82 | 0,5 | 0,5 | 0,75 | 1,28 | 78,8 | 1 | 0,88 | 0,68 |
| Fig. 9 | 4 | 2,5 | 5 | 90 | 78 ,8 | 0,5 | 0,5 | 0,75 | 0,95 | 78,8 | 1 | 0,88 | 0,92 |
| Fig. 10 | 4 | 2,5 | 10 | 90 | 82 ,1 | 0,5 | 0,5 | 0,75 | 1,33 | 82,1 | 1 | 0,91 | 0,69 |
| Fig. 14 | 4 | 2,5 | 5 | 90 | 90 | 0,5 | 0,5 | 0,75 | 5,95 | 67,6 | **2** | 0,75 | 0,13 |
| Fig. 15 | 4 | 2,5 | 5 | 90 | 67 ,6 | 0,5 | 0,5 | 0,75 | 0,95 | 67,6 | **2** | 0,75 | 0,79 |
| Fig. 16 | 4 | 2,5 | 5 | 90 | 90 | 0 | 0,5 | 0,75 | 0,42 | 61,8 | 1 | 0,69 | 1,63 |

Die Tabelle zeigt, dass der Kantenindex der Platte 1' mit dem Wert 1,63 außerhalb des beanspruchten Bereichs für den Kantenindex $I_N$ liegt.

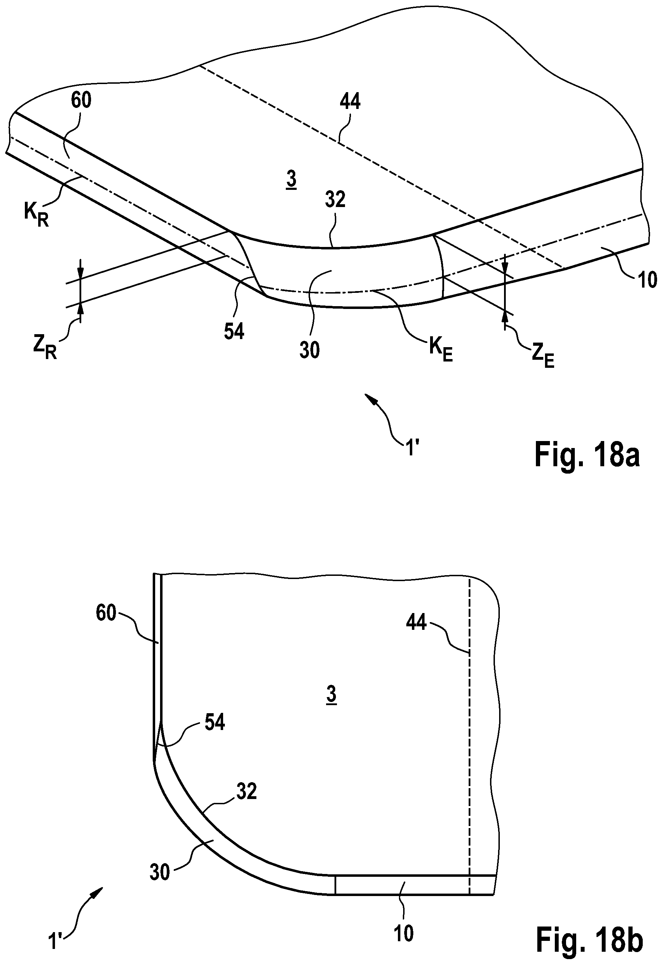

In der Fig. 18a ist die Unterseite einer Ecke E der Platte 1' nach dem Stand der Technik perspektivisch dargestellt. Die Fig. 18b zeigt die Draufsicht der in Fig. 18a dargestellten Platte 1'. Es sind deutlich die drei Flächen 10, 30 und 60 im Randbereich der Platte 1' zu sehen.

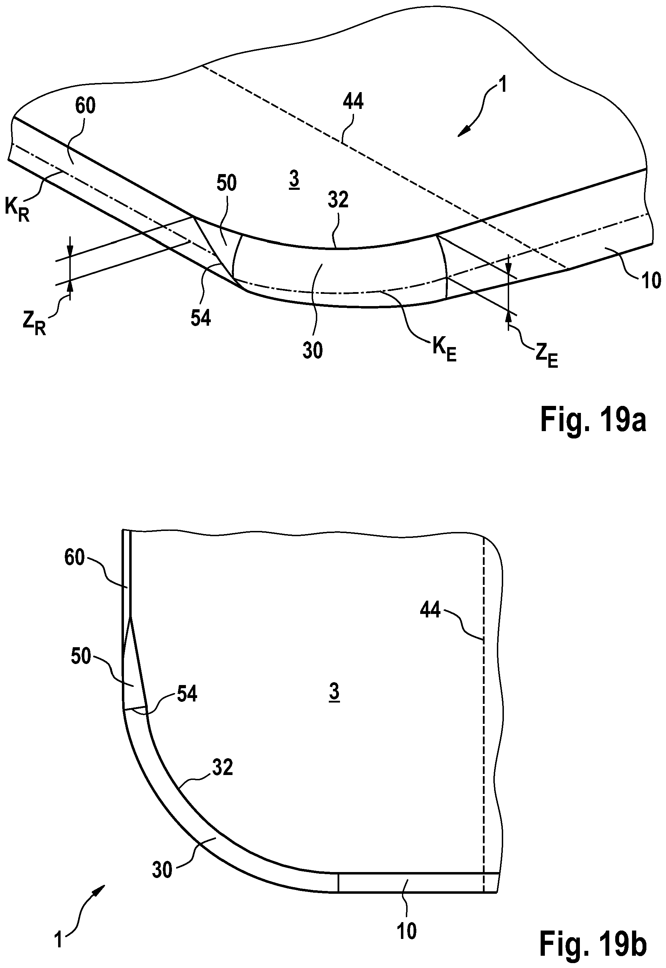

Die Fig. 19a und 19b zeigen die zu den Fig. 18a und 18b entsprechenden Darstellungen für eine erfindungsgemäße Platte 1. Die Unteransichten unterscheiden sich durch die zusätzliche Übergangsfläche 50.

In den Figuren 20a bis 24 sind die Verfahrensschritte gemäß der zweiten Ausführungsform des Verfahrens dargestellt.

Die Fig. 1 veranschaulicht auch für diese zweite Ausführungsform des Verfahrens die Ausgangssituation gemäß Verfahrensschritt a) mit dem Unterschied, dass bei der Breite $B_1$ des Rohlings eine Materialzugabe $B_{ZG}$ berücksichtigt wurde.

Die Fig. 20a zeigt die Draufsicht auf den Plattenrohling 200 nach Durchführung des Verfahrensschrittes b) gemäß der zweiten Ausführungsform des Verfahrens. Die Materialzugabe $B_{ZG}$ erstreckt sich über die gesamte Länge L. Durch das Vorschleifen der Kantenflächen hat sich die Breite $B_1$ auf die Breite $B_3$ verringert.

Die Figur 20b zeigt einen Schnitt durch den bearbeiteten Rohling 200 längs der Linie I-II in Figur 20a, so dass das Profil $P_1$ zu sehen ist.

Die Figur 21a zeigt die Draufsicht auf den bearbeiteten Rohling nach Durchführung des Facettierens gemäß Verfahrensschritt c). Die Schnittdarstellung längs der Linie I-II in Fig. 21a zeigt die Fig. 21b.

Die Figur 22a zeigt die Draufsicht auf die Platte nach dem Überschleifen der Restkantenfläche 60 gemäß des Verfahrensschrittes d) und Figur 22b zeigt den Schnitt durch die Platte längs der Linie I-II in Figur 22a, so dass das Profil $P_R$ zu sehen ist

Die Figur 23 zeigt eine Draufsicht auf die fertiggestellte Platte 1 nach dem Überschleifen der Ecke E gemäß dem Verfahrensschritt e).

In der Fig. 24 ist gestrichelt die Bewegungsbahn 400 eines nicht dargestellten Schleifwerkzeugs zur Herstellung der Rundung der Ecke E und der Übergangsfläche 60 dargestellt. In der hier gezeigten Darstellung verläuft die Bewegungskurve im Wesentlichen S-förmig.

**Bezugszeichenliste**

| | |
|---|---|
| 1 | Glas-oder Glaskeramikplatte |
| 1' | Glas-oder Glaskeramikplatte nach dem Stand der Technik |
| 2 | erste Oberseitenfläche |
| 3 | zweite Oberseitenfläche |
| 10 | erste Kantenfläche |
| 20 | zweite Kantenfläche |
| 21 | obere Kante |
| 30 | Eckfläche |
| 31 | obere Kante |
| 32 | untere Kante |
| 33 | Grenzlinie |
| 34 | Begrenzungslinie |

| | | |
|---|---|---|
| 40 | Facette |
| 42 | Facettenfläche |
| 44 | Facettenkante |
| 50 | Übergangsfläche |
| 52 | erste Begrenzungslinie |
| 54 | zweite Begrenzungslinie |
| 56 | untere Kantenlinie |
| 58a,b,c | Ecken der Übergangsfläche |
| 59 | Schnittpunkt |
| 60 | Restkantenfläche |
| 100 | umlaufende Unterkante |
| 110 | umlaufende Oberkante |
| 200 | Rohling |
| 210 | erste Kantenfläche |
| 220 | zweite Kantenfläche |
| 220a | Restkantenfläche |
| 230 | Eckfläche |
| 240 | Randstreifen |
| 242 | gerader Randstreifenabschnitt |
| 243 | Verbindungslinie |
| 244 | Übergangsabschnitt |
| 248 | Tangentpunkt |
| 250 | Übergangsabschnittsfläche |
| 300 | Schleifwerkzeug, Schleifscheibe |
| 400 | Bewegungsbahn des Schleifwerkzeugs |
| B | Breite Endmaß der Platte 1 |
| $B_1$ | Breite des Rohlings |
| $B_2$ | Breite des Rohlings ohne Materialzugabe |
| $B_3$ | Breite des Rohlings nach Vorschliff |
| $B_{ZG}$ | Breite der Materialzugabe |
| $B_{AT}$ | Breite des Materialabtrags |
| L | Länge Endmaß der Platte 1 |
| $L_1$ | Länge des Rohlings |
| $L_2$ | Länge des Rohlings ohne Materialzugabe |
| $L_3$ | Länge des Rohlings nach Vorschliff |
| W | Eckwinkel |
| $\alpha$ | Facettenwinkel |
| $\beta$ | Eckwinkel der Schleifkontur |
| $\gamma$ | Winkel zwischen erster Kantenfläche 10, 210 und zweiter Kantenfläche 20, 220 |
| $P_1$ | Profil |
| $P_R$ | Restkantenprofil |
| $P_E$ | Eckprofil |
| $P_Ü$ | Profil der Übergangsfläche |
| $R_1$ | Krümmungsradius des Profils $P_1$ |
| $R_R$ | Krümmungsradius des Profils $P_R$ |
| $HK_1$ | horizontale Kontur von Profil $P_1$ |
| $VK_1$ | vertikale Kontur von Profil $P_1$ |
| $HK_R$ | horizontale Kontur von Profil $P_R$ |
| $VK_R$ | vertikale Kontur von Profil $P_R$ |
| $HK_E$ | horizontale Kontur von Profil $P_E$ |
| $VK_E$ | vertikale Kontur von Profil $P_E$ |
| $HK_Ü$ | horizontale Kontur von Profil $P_Ü$ |
| $VKü$ | vertikale Kontur von Profil $P_Ü$ |
| K | Konturlinie |
| $K_1$ | Konturlinie der ersten Kantenfläche |
| $K_E$ | Konturlinie der Ecke |
| $K_R$ | Konturlinie der Restkante |
| $K_V$ | Verbindungskonturlinie |

| R | Eckradius |
|---|---|
| $R_S$ | Radius der Schleifscheibe |
| $R_Ü$ | Radius des Übergangsflächenabschnitts |
| $S_1$ | erste Scheitellinie |
| $S_2$ | Scheitellinie |
| $S_R$ | Scheitellinie der Restkante |
| $S_E$ | Scheitellinie der Ecke E |
| $P_{h1}$ | Profilhöhe in x-Richtung |
| $P_{h2}$ | Profilhöhe in x-Richtung |
| $V_Y$ | horizontaler Versatz der Konturlinien $K_E$ und $K_R$ |
| $V_Z$ | vertikaler Versatz der Konturlinien $K_E$ und $K_R$ |
| $V_X$ | Versatz der Konturlinien $K_E$ und $K_R$ in x-Richtung |
| D | Dicke der Platte |
| $D_R$ | Dicke der Platte an der Restkantenfläche |
| M | Mittelpunkt des Eckwinkels W |
| $M_P$ | Mittellinie der Platte |
| $Z_1$ | Abstand der Konturlinie $K_1$ von Unterkante 100 |
| $Z_R$ | Abstand der Konturlinie $K_R$ von Unterkante 100 |
| $Z_E$ | Abstand der Konturlinie $K_E$ von Unterkante 100 |
| $A_R$ | Abstand $K_R$ von M |
| E | Ecke |

**Patentansprüche**

1.  Glas- oder Glaskeramikplatte (1)

    mit einer in einem orthogonalen xyz-Koordinatensystem in der xy-Ebene liegenden ersten Oberseitenfläche (2) und einer zweiten Oberseitenfläche (3),
    mit einer umlaufenden Unterkante (100) und einer umlaufenden Oberkante (110)
    mit mindestens einer ersten Kantenfläche (10) und mindestens einer zweiten Kantenfläche (20), wobei die Kantenflächen (10, 20) miteinander einen Winkel $\gamma$ bilden, und
    mit einer beide Kantenflächen (10, 20) verbindenden gekrümmten Eckfläche (30) einer Ecke E mit einem Krümmungsradius R, mit einer Konturlinie $K_E$ und mit einem Eckwinkel W,
    wobei die Oberseitenfläche (2) an mindestens einer der beiden Kantenflächen (10, 20) eine Facette (40) mit einer Facettenfläche (42) aufweist, wodurch an der Kantenfläche (10, 20) eine Restkantenfläche (60) mit einer Dicke $D_R$ und einer Konturlinie $K_R$ ausgebildet wird, wobei die Konturlinie $K_R$ einen Abstand $z_R$ von der Unterkante (100) aufweist, **dadurch gekennzeichnet,**

    **dass** die Platte (1) an der Ecke E und der angrenzenden Restkantenfläche (60) einen Kantenindex aufweist

    $$I_N = \frac{W_N}{V_Y}$$

    $$W_N = \frac{W}{\gamma}$$
    mit $\quad$ und $V_Y \neq 0$,
    wobei $V_y$ in mm den Abstand der Konturlinien $K_R$ und $K_E$ in y-Richtung bezeichnet und
    **dass** für $I_N$ in mm$^{-1}$ gilt:

    $$0{,}1 \leq I_N \leq 1{,}5.$$

2.  Glas- oder Glaskeramikplatte (1) nach Anspruch 1, **dadurch gekennzeichnet, dass** die Eckfläche (30) ein Profil $P_E$ und die Restkantenfläche (60) ein Profil $P_R$ aufweisen und dass mindestens eines der Profile $P_E$ oder $P_R$ ein in z-Richtung rundes Profil mit mindestens einem Krümmungsradius ist.

3.  Glas- oder Glaskeramikplatte nach Anspruch 2, **dadurch gekennzeichnet, dass** beide Profile $P_E$ und $P_R$ ein in z-Richtung rundes Profil mit mindestens einem Krümmungsradius sind.

4.  Verfahren zur Herstellung einer Glas- oder Glaskeramikplatte (1) mit folgenden Schritten in folgender Reihenfolge:

a) Bereitstellen eines Plattenrohlings (200)

- mit einer in einem orthogonalen xyz-Koordinatensystem in einer xy- Ebene liegenden ersten Oberseitenfläche (2) und einer, in einer parallelen xy-Ebene liegenden zweiten Oberseitenfläche (3), und
- mit mindestens einer ersten Kantenfläche (210) und einer zweiten Kantenfläche (220), die miteinander einen Winkel $\gamma$ bilden,

b) Vorschleifen mindestens der Kantenflächen (210, 220),

- wobei mindestens zwischen den Kantenflächen (210, 220) eine Eckfläche (230) mit einem Eckradius R und einem Eckwinkel $\beta$ der Schleifkontur hergestellt wird,
- wobei an mindestens einer Kantenfläche (210, 220) ein an die Eckfläche (230) angrenzender, sich über die Kantenfläche (210, 220) in x- oder in y-Richtung erstreckender Randstreifen (240) mit der Breite $B_{ZG}$ herausgearbeitet wird und
- wobei mindestens die Kantenflächen (210, 220), die Eckfläche (230) und der Randstreifen (240) mit einem Profil $P_1$ versehen werden,

c) Facettieren einer Oberseitenfläche (2, 3), wobei mindestens eine, zu der den Randstreifen (240) aufweisenden Kantenfläche (210, 220) auslaufende Facette (40) hergestellt und die Kantenfläche (210, 220) zu einer Restkantenfläche verringert wird,
d) Überschleifen der Restkantenfläche, wobei die Restkantenfläche mit einem Profil $P_R$ versehen wird.

5. Verfahren nach Anspruch 4, **dadurch gekennzeichnet, dass** beim Herausarbeiten des Randstreifens (240) ein gerader Randstreifenabschnitt (242) und ein Übergangsabschnitt (244) mit einer Übergangsabschnittsfläche (250) hergestellt werden, wobei die Übergangsabschnittsfläche (250) zur Eckfläche (230) ausläuft.

6. Verfahren nach einem der Ansprüche 4 oder 5, **dadurch gekennzeichnet, dass** beim Herausarbeiten des Rand-streifens (240) der Eckwinkel $\beta$ der Schleifkontur auf $60° \leq \beta \leq 90°$ eingestellt wird.

7. Verfahren nach einem der Ansprüche 4 bis 6, **dadurch gekennzeichnet, dass** das Überschleifen im Verfahrensschritt d) im Bereich des geraden Randstreifenabschnitts (242) des Randstreifens (240) mit einem Materialabtrag $B_{AT}$ einhergeht, wobei $0,1 \cdot B_{ZG} \leq B_{AT} \leq 2 \cdot B_{ZG}$ ist.

8. Verfahren zur Herstellung einer Glas- oder Glaskeramikplatte (1) mit folgenden Schritten in folgender Reihenfolge:

a) Bereitstellen eines Plattenrohlings (200)

- mit einer in einem orthogonalen xyz-Koordinatensystem in einer xy-Ebene liegenden ersten Oberseitenfläche (2) und einer, in einer parallelen xy-Ebene liegenden zweiten Oberseitenfläche (3),
- mit mindestens einer ersten Kantenfläche (210) und einer zweiten Kantenfläche (220), die miteinander eine Ecke E mit einem Winkel $\gamma$ bilden und
- mit einer Breite $B_1$ und einer Länge $L_1$, wobei an mindestens einer Kantenfläche (210, 220) eine Materialzugabe der Breite $B_{ZG}$ berücksichtigt ist,

b) Vorschleifen mindestens der Kantenflächen (210, 220),

- wobei mindestens die Kantenflächen (210, 220) mit einem Profil $P_1$ versehen werden,

c) Facettieren einer Oberseitenfläche (2, 3),

- wobei mindestens eine, zu der die Materialzugabe $B_{ZG}$ aufweisenden Kantenfläche (210, 220) auslaufende Facette (40) hergestellt und die Kantenfläche (210, 220) zu einer Restkantenfläche (60) verringert wird,

d) Überschleifen der Restkantenfläche (60),

- wobei die Restkantenfläche (60) mit einem Profil $P_R$ versehen wird,

e) Überschleifen der mindestens einen Ecke E,

- wobei zwischen den Kantenflächen (210, 220) eine Eckfläche (230) mit einem Eckradius R und einem Eckwinkel der Schleifkontur β hergestellt wird.

9. Verfahren nach Anspruch 8, **dadurch gekennzeichnet, dass** die Materialzugabe der Breite $B_{ZG}$ sich über die gesamte Breite $B_1$ und oder Länge $L_1$ erstreckt.

10. Verfahren nach einem der Ansprüche 8 oder 9, **dadurch gekennzeichnet, dass** das Überschleifen im Verfahrensschritt d) mit einem Materialabtrag $B_{AT}$ einhergeht, wobei $0{,}1 \cdot B_{ZG} \leq B_{AT} \leq 2 \cdot B_{ZG}$ ist.

11. Verfahren nach mindestens einem der Ansprüche 8 bis 10, **dadurch gekennzeichnet, dass** der Verfahrensschritt e) mittels eines Schleifwerkzeugs durchgeführt wird, wobei das Schleifwerkzeug (300) ausgehend von einer Kantenfläche (210, 220) bis zum Erreichen des Eckwinkels β um die Ecke E herumgeführt wird und anschließend über die Restkantenfläche (60) kontinuierlich entfernt wird.

12. Verfahren nach einem der Ansprüche 4 bis 11, **dadurch gekennzeichnet, dass** die Breite $B_{ZG}$ so groß gewählt wird, dass das Profil $P_1$ des Randstreifens (240) im Verfahrensschritt d) vollständig durch das Profil $P_R$ ersetzt wird.

13. Verfahren nach einem der Ansprüche 4 bis 12, **dadurch gekennzeichnet, dass** das Profil des Eckradius $P_E$ entsprechend dem Profil $P_1$ der angrenzenden Kantenfläche (210, 220) hergestellt wird.

## Claims

1. Glass or glass ceramic plate (1)

   with a first upper surface (2) lying in the xy plane in an orthogonal xyz coordinate system and a second upper surface (3),
   with a circumferential lower edge (100) and a circumferential upper edge (110)
   with at least one first edge surface (10) and at least one second edge surface (20), wherein the edge surfaces (10, 20) together form an angle $\gamma$, and
   with a curved corner surface (30) connecting both edge surfaces (10, 20) of a corner E with a radius of curvature R, with a contour line $K_E$ and with a corner angle W,
   wherein the upper surface (2) has a facet (40) with a facet surface (42) on at least one of the two edge surfaces (10, 20), whereby a remaining edge surface (60) with a thickness $D_R$ and a contour line $K_R$ is formed on the edge surface (10, 20), wherein the contour line $K_R$ has a distance $z_R$ from the lower edge (100), **characterised in that**

   the plate (1) has an edge index $I_N = \dfrac{W_N}{V_Y}$ at the corner E and the adjacent remaining edge surface (60)

   with $W_N = \dfrac{W}{\gamma}$ and $V_Y \neq 0$,
   wherein $V_y$ in mm is the distance between the contour lines $K_R$ and $K_E$ in the y-direction and
   $I_N$ in $mm^{-1}$ is:

   $$0.1 \leq I_N \leq 1.5.$$

2. Glass or glass ceramic plate (1) according to claim 1, **characterised in that** the corner surface (30) has a profile $P_E$ and the remaining edge surface (60) has a profile $P_R$ and that at least one of the profiles $P_E$ or $P_R$ is a round profile in the z-direction with at least one radius of curvature.

3. Glass or glass ceramic plate according to claim 2, **characterised in that** both profiles $P_E$ and $P_R$ are a round profile in the z-direction with at least one radius of curvature.

4. Method for producing a glass or glass ceramic plate (1) with the following steps in the following order:

   a) Providing a plate blank (200)

      - with a first upper surface (2) lying in an xy plane in an orthogonal xyz coordinate system and a second upper surface (3) lying in a parallel xy plane, and
- with at least one first edge surface (210) and one second edge surface (220) which together form an angle y,

b) Pre-grinding at least the edge surfaces (210, 220),

- wherein a corner surface (230) with a corner radius R and a corner angle $\beta$ of the grinding contour is produced at least between the edge surfaces (210, 220),
- wherein an edge strip (240) with the width $B_{ZG}$, which borders on the corner surface (230) and extends over the edge surface (210, 220) in the x- or y-direction, is machined on at least one edge surface (210, 220) and
- wherein at least the edge surfaces (210, 220), the corner surface (230) and the edge strip (240) are provided with a profile $P_1$,

c) Facetting an upper surface (2, 3), wherein at least one facet (40) extending to the edge surface (210, 220) having the edge strip (240) is produced and the edge surface (210, 220) is reduced to a remaining edge surface,
d) Grinding the remaining edge surface, wherein the remaining edge surface is provided with a profile $P_R$.

5. Method according to claim 4, **characterised in that** when machining the edge strip (240), a straight edge strip section (242) and a transition section (244) with a transition section surface (250) are produced, wherein the transition section surface (250) extends to the corner surface (230).

6. Method according to one of claims 4 or 5, **characterised in that** when machining the edge strip (240), the corner angle $\beta$ of the grinding contour is set to $60° \leq \beta \leq 90°$.

7. Method according to one of claims 4 to 6, **characterised in that** the grinding in method step d) in the region of the straight edge strip section (242) of the edge strip (240) involves a material removal $B_{AT}$, wherein $0.1 \cdot B_{ZG} \leq B_{AT} \leq 2 \cdot B_{ZG}$.

8. Method for producing a glass or glass ceramic plate (1) with the following steps in the following order:

a) Providing a plate blank (200)

- with a first upper surface (2) lying in an xy plane in an orthogonal xyz coordinate system and a second upper surface (3) lying in a parallel xy plane,
- with at least one first edge surface (210) and one second edge surface (220) which together form a corner E with an angle $\gamma$, and
- with a width $B_1$ and a length $L_1$, wherein a material allowance of the width $B_{ZG}$ is taken into account on at least one edge surface (210, 220),

b) Pre-grinding at least the edge surfaces (210, 220),

- wherein at least the edge surfaces (210, 220) are provided with a profile $P_1$,

c) Facetting an upper surface (2, 3),

- wherein at least one facet (40) extending to the edge surface (210, 220) having the material allowance $B_{ZG}$ is produced and the edge surface (210, 220) is reduced to a remaining edge surface (60),

d) Grinding the remaining edge surface (60),

- wherein the remaining edge surface (60) is provided with a profile $P_R$,

e) Grinding the at least one corner E,

- wherein a corner surface (230) with a corner radius R and a corner angle of the grinding contour $\beta$ is produced between the edge surfaces (210, 220).

9. Method according to claim 8, **characterised in that** the material allowance of the width $B_{ZG}$ extends over the entire width $B_1$ and/or length $L_1$.

**10.** Method according to one of claims 8 or 9, **characterised in that** the grinding in method step d) involves a material removal $B_{AT}$, wherein $0.1 \cdot B_{ZG} \leq B_{AT} \leq 2 \cdot B_{ZG}$.

**11.** Method according to at least one of claims 8 to 10, **characterised in that** method step e) is carried out using a grinding tool, wherein the grinding tool (300) is guided around the corner E starting from an edge surface (210, 220) until the corner angle $\beta$ is reached and is then continuously removed over the remaining edge surface (60).

**12.** Method according to one of claims 4 to 11, **characterised in that** the width $B_{ZG}$ is selected to be sufficiently large that the profile $P_1$ of the edge strip (240) is completely replaced by the profile $P_R$ in method step d).

**13.** Method according to one of claims 4 to 12, **characterised in that** the profile of the corner radius $P_E$ is produced according to the profile $P_1$ of the adjacent edge surface (210, 220).

**Revendications**

**1.** Plaque en verre ou en vitrocéramique (1) avec une première surface supérieure (2) située dans un système de coordonnées orthogonales xyz dans le plan xy et une deuxième surface supérieure (3),

avec un chant inférieur périphérique (100) et un chant supérieur périphérique (110) avec au moins une première surface de chant (10) et au moins une deuxième surface de chant (20), les surfaces de chant (10, 20) formant entre elles un angle y, et
avec une surface de coin incurvée (30) reliant les deux surfaces de chant (10, 20) d'un coin E avec un rayon de courbure R, avec une ligne de contour $K_E$ et avec un retour de coin W,
la surface supérieure (2) comportant, sur au moins l'une des deux surfaces de chant (10, 20), une facette (40) avec une surface de facette (42), formant ainsi sur la surface de chant (10, 20) une surface de chant résiduelle (60) d'une épaisseur $D_R$ et d'une ligne de contour $K_R$, la ligne de contour $K_R$ comportant une distance $z_R$ par rapport au chant inférieur (100), **caractérisé en ce que,**

la plaque (1) comporte un indice de chant $I_N = \dfrac{W_N}{V_Y}$ au niveau du coin E et de la surface de chant résiduelle (60) adjacente

avec $W_N = \dfrac{W}{\gamma}$ et $V_Y \neq 0$,
dans lequel $V_y$ représente la distance en mm entre les lignes de contour $K_R$ et $K_E$ dans la direction y et **en ce que** pour $I_N$ en mm$^{-1}$ :

$$0,1 \leq I_N \leq 1,5.$$

**2.** Plaque en verre ou en vitrocéramique (1) selon la revendication 1, **caractérisée en ce que** la surface de coin (30) comporte un profil $P_E$ et la surface de chant résiduelle (60) comporte un profil $P_R$ et **en ce qu'**au moins l'un des profils $P_E$ ou $P_R$ est un profil circulaire dans la direction z avec au moins un rayon de courbure.

**3.** Plaque en verre ou en vitrocéramique selon la revendication 2, **caractérisée en ce que** les deux profils $P_E$ et $P_R$ sont un profil circulaire dans la direction z avec au moins un rayon de courbure.

**4.** Procédé de fabrication d'une plaque en verre ou en vitrocéramique (1) avec les étapes suivantes dans l'ordre suivant :

a) préparation d'une ébauche de plaque (200)

- avec une première surface supérieure (2) située dans un plan xy dans un système de coordonnées orthogonal xyz et une deuxième surface supérieure (3) située dans un plan parallèle xy, et
- avec au moins une première surface de chant (210) et une deuxième surface de chant (220), qui forment entre elles un angle y,

b) pré-polissage d'au moins les surfaces de chant (210, 220),

- une surface de coin (230) avec un rayon de coin R et un angle de coin β du contour de meulage étant réalisée au moins entre les surfaces de chant (210, 220),
- une bande de rive (240) adjacente à la surface de coin (230), s'étendant sur la surface de chant (210, 220) dans la direction x ou dans la direction y et ayant la largeur $B_{ZG}$ étant usinée sur au moins une surface de chant (210, 220) et
- au moins les surfaces de chant (210, 220), la surface de coin (230) et la bande de rive (240) étant pourvues d'un profil $P_1$,

c) facettage d'une surface supérieure (2, 3), dans laquelle au moins une facette (40) se terminant par la surface de chant (210, 220) comportant la bande de rive (240) est réalisée et la surface de chant (210, 220) est réduite à une surface de chant résiduelle,
d) ponçage de la surface de chant résiduel, la surface de chant résiduel étant pourvue d'un profil $P_R$.

5. Procédé selon la revendication 4, **caractérisé en ce que** lors de l'ébauche de la bande de rive (240), une section de bande de rive droite (242) et une section de transition (244) avec une surface de section de transition (250) sont produites, la surface de section de transition (250) se terminant vers la surface de coin (230).

6. Procédé selon l'une des revendications 4 ou 5, **caractérisé en ce que** le coin d'angle β du contour de meulage est réglé sur 60° ≤ β ≤ 90° lors de l'ébauche de la bande de rive (240).

7. Procédé selon l'une quelconque des revendications 4 à 6, **caractérisé en ce que** le surfaçage à l'étape d) du procédé s'accompagne d'un enlèvement de matière $B_{AT}$ dans la zone de la section de la bande de rive droite (242) de la bande de rive (240) où $0{,}1 \cdot B_{ZG} \leq B_{AT} \leq 2 \cdot B_{ZG}$.

8. Procédé de fabrication d'une plaque en verre ou en vitrocéramique (1) avec les étapes suivantes dans l'ordre suivant :

a) préparation d'une ébauche de plaque (200)

- avec une première surface supérieure (2) située dans un plan xy dans un système de coordonnées orthogonal xyz et une deuxième surface supérieure (3) située dans un plan parallèle xy,
- avec au moins une première surface de chant (210) et une deuxième surface de chant (220), qui forment entre elles un coin E avec un angle y et
- avec une largeur $B_1$ et une longueur $L_1$, un ajout de matière de la largeur $B_{ZG}$ étant pris en compte sur au moins une surface de chant (210, 220),

b) pré-polissage d'au moins les surfaces de chant (210, 220),

- au moins les surfaces de chant (210, 220) étant pourvues d'un profil $P_1$,

c) facettage d'une surface supérieure (2, 3),

- au moins une facette (40) se terminant par la surface de chant (210, 220) comportant l'ajout de matière $B_{ZG}$ étant réalisée et la surface de chant (210, 220) étant réduite à une surface de chant résiduelle (60),

d) rectification de la surface de chant résiduelle (60),

- la surface de chant résiduelle (60) étant pourvue d'un profil $P_R$,

e) rectification d'au moins un coin E,

- une surface de coin (230) avec un rayon de coin R et un angle de coin du contour de meulage β étant réalisée entre les surfaces de chant (210, 220).

9. Procédé selon la revendication 8, **caractérisé en ce que** l'ajout de matière de la largeur $B_{ZG}$ s'étend sur toute la largeur $B_1$ et ou la longueur $L_1$.

10. Procédé selon l'une quelconque des revendications 8 ou 9, **caractérisée en ce que** le surfaçage à l'étape d) du procédé s'accompagne d'un enlèvement de matière $B_{AT}$, où $0{,}1 \cdot B_{ZG} \leq B_{AT} \leq 2 \cdot B_{ZG}$.

**11.** Procédé selon au moins l'une quelconque des revendications 8 à 10, **caractérisé en ce que** l'étape du procédé est réalisée e) au moyen d'un outil de ponçage, l'outil de ponçage (300) étant guidé autour du coin E en partant d'une surface de chant (210, 220) jusqu'à atteindre l'angle de coin $\beta$ et étant ensuite retiré en continu sur la surface de chant résiduelle (60).

**12.** Procédé selon l'une des revendications 4 à 11, **caractérisé en ce que** la largeur $B_{ZG}$ est choisie suffisamment grande pour que le profil $P_1$ de la bande de rive (240) soit entièrement remplacé par le profil $P_R$ à l'étape du procédé d).

**13.** Procédé selon l'une quelconque des revendications 4 à 12, **caractérisé en ce que** le profil du rayon de coin $P_E$ est réalisé en fonction du profil $P_1$ de la surface de chant adjacente (210, 220).

220

I

200

210

210

B₁

210

220

L₁

II

**Fig. 1a**

200

2

D

220

3

**Fig. 1b**

**Fig. 2a**

**Fig. 2b**

**Fig. 2c**

**Fig. 2d**

**Fig. 2e**

Fig. 2f

**Fig. 3a**

**Fig. 3b**

Fig. 3c

EP 3 959 034 B1

**Fig. 4a**

**Fig. 4b**

**Fig. 4c**

Fig. 5

Fig. 6

Fig. 7

Fig. 8

Fig. 8a

Fig. 9

EP 3 959 034 B1

Fig. 10

**Fig. 11**

Fig. 12

**Fig. 13**

Fig. 14

Fig. 15

EP 3 959 034 B1

Fig. 16

Fig. 17

Fig. 18a

Fig. 18b

Fig. 19a

Fig. 19b

**Fig. 20a**

**Fig. 20b**

**Fig. 21a**

**Fig. 21b**

**Fig. 22a**

**Fig. 22b**

Fig. 23

Fig. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002160147 A
- WO 0245909 A1

- WO 2014035946 A1